# EUROPEAN PATENT SPECIFICATION

(11) **EP 1 000 406 B1**
(45) Date of publication and mention of the grant of the patent: **25.08.2004**
(21) Application number: 99925014.5
(22) Date of filing: 20.05.1999
(51) Int. Cl.: G06K 7/00

(54) **CONNECTOR FOR CONNECTING A SMART CARD COMPRISING MEANS FOR AUTOMATICALLY EJECTING THE CARD**
VERBINDER ZUM VERBINDEN EINER IC KARTE DER EINE VORRICHTUNG ENTHÄLT ZUM AUTOMATISCHEN AUSWERFEN DER KARTE
CONNECTEUR ASSURANT LA CONNEXION D'UNE CARTE INTELLIGENTE, AVEC SYSTEME D'EJECTION AUTOMATIQUE DE LA CARTE

(30) Priority: 29.05.1998 FR 9806852
(43) Date of publication of application: 17.05.2000
(73) Proprietor: ITT MANUFACTURING ENTERPRISES, INC., Wilmington, Delaware 19801 (US)
(72) Inventor: BRICAUD, Hervé, F-39100 Dole (FR); VALCHER, Fabrice, F-39100 Damparis (FR)
(74) Representative: Kohn, Philippe
(86) International application number: PCT/EP1999/003450
(87) International publication number: WO 1999/063474

(56) References cited:
- EP-A- 0 459 584
- EP-A- 0 720 259
- FR-A- 2 742 561

## Description

The present invention relates to an electrical connector for connecting a contact-type smart card - also called a chip card - to a read/write device.

The invention relates more particularly to an electrical connector of the type described and illustrated in WO-A-97/39418.

This application describes and illustrates an electrical connector for the connection of a contact-type smart card, the connector comprising a support made of insulating material and a housing, which housing is open in its upper face, and is bounded laterally by two edges parallel to the direction of insertion of the card into the connector, and which housing at least partly accommodates the card, said card having, on its lower main face, conducting pads which engage with the contact ends of electrical contact elements of the connector when the card is in its contact position, these contact elements being arranged in the bottom of the housing in the insulating support, and said connector further comprising a fitted cover, the upper wall of said cover extends at least partly above the insulating support of the connector.

Various examples of such a design of an electrical connector, and especially those described and illustrated in document EP-A1-0.738.938, are known.

The above-mentioned WO-A-97/39418 has already proposed to retain a card inside the housing in the connector, against an elastic ejection force which permanently stresses it, by various structural retaining means which are fitted onto the connector.

The object of the present invention is to propose a reliable and inexpensive design of a connector of the aforementioned type, which has the advantage of integrating the means for automatically ejecting the card from and for retaining the card in the connector into the main minimum components of the connector, i.e. the insulating support and its cover.

For this purpose, the invention proposes an electrical connector of the type mentioned above, characterised in that the connector further comprises a spring for engaging the rear transverse edge of the card and for ejecting the card from the connector, and in that the cover has a retractable device for retaining the card in the position it is in after being inserted into the connector.

According to other characteristics of the invention:
- the retractable device is made as one piece with the cover;
- the retractable retaining device has a retaining lip which is carried by an elastically deformable arm of the cover, a stop edge of which normally extends opposite the front transverse edge of the card, and which can be moved, by elastic deformation of the arm which carries it, to a retracted position in which the card can be ejected longitudinally, at least partially; by the ejection spring;
- the profile of the stop edge is complementary to that of the portion of the front transverse edge of the card opposite which it extends;
- the card has, at one of the corners of its front transverse edge, a corner face which constitutes a means of polarizing the position of the card in the connector, and the stop edge of the retaining lip extends opposite the corner face of the card;
- when the card is being inserted into the connector, the retaining lip is automatically moved aside by the action of the rear transverse edge of the card which engages with one edge of the cam-forming lip in order to cause the elastic deformation of the arm, the lip bearing against a facing portion of the card during the insertion or ejection travel by the card;
- the arm carrying the retaining lip extends parallel to the direction of insertion of the card;
- the arm carrying the retaining lip extends perpendicular to the direction of insertion of the card;
- the cover is made in the form of a plate which has at least one slot or cut-out, parallel to one of its edges, which delimits the arm carrying the retaining lip;
- the arm carrying the retaining lip extends in the plane of an upper wall of the cover, opposite a facing portion of the upper face of the insulating support;
- the arm carrying the retaining lip extends in a plane perpendicular to the plane of an upper wall of the cover, opposite one of the external lateral faces of the insulating support;
- the arm carrying the retaining lip extends in a plane parallel to the plane of an upper wall of the cover, opposite a facing portion of the lower face of the insulating support;
- the arm carrying the retaining lip has a tab for initiating its elastic deformation in order to retract the retaining lip;
- the ejection spring extends inside a housing at least partly formed in the upper face of the insulating support and/or of the cover;
- the spring is a fitted element carried by the insulating support and/or the cover;
- the spring is an elastically deformable strip made as one piece with the cover;
- the cover is a piece made of cut and folded sheet metal;
- the cover is a plastic moulded piece;
- the cover is fitted directly onto the insulating support;
- the cover is fitted onto a printed-circuit board which carries the insulating support.

Further characteristics and advantages of the invention will appear on reading the detailed description which follows, for the understanding of which reference will be made to the appended drawings, in which:
- Figure 1 is a perspective top three-quarter rear view of a first embodiment of a connector made in accordance with the teachings of the invention, in which figure a card is illustrated in the process of being inserted into the connector;
- Figure 2 is a view similar to that in Figure 1, in which the connector is illustrated in a top three-quarter front view;
- Figure 3 is a top view of the connector in Figures 1 and 2, in which the connector is illustrated without a card;
- Figure 4 is a perspective bottom view of the cover of the connector in Figure 1;
- Figure 5 is a perspective top view of the insulating support of the connector in Figure 2;
- Figure 6 is a perspective bottom view of the insulating support in Figure 5;
- Figure 7 is a top view of the ejection spring of the connector illustrated in the previous figures the spring being illustrated in its free state;
- Figure 8 is a view similar to that in Figure 2, in which the connector is illustrated without its cover and without a card;
- Figure 9 is a view similar to that in Figure 1, with partial cut-away of the rear part of the cover;
- Figure 10 is a view similar to that in Figure 9, in which the card is illustrated in its contact position after it has been inserted into the connector;
- Figure 11 is a view similar to that in Figure 9, corresponding to a second embodiment which differs from the first by the design of the ejection spring;
- Figure 12 is a perspective view of the spring with which the connector in Figures 11 and 13 is equipped;
- Figure 13 is a view on a larger scale of the detail D13 in Figure 11;
- Figure 14 is a view similar to that in Figure 11, in which the card is illustrated in its contact position after having been inserted into the connector;
- Figure 15 is a perspective top three-quarter front view of the insulating support of the connector illustrated in Figures 11 to 14;
- Figure 16 is a bottom view of the support illustrated in Figure 15;
- Figure 17 is a view similar to that in Figure 1, which illustrates a third embodiment differing from the two previous ones by the design of the ejection spring;
- Figures 18 and 19 are views similar to those in Figures 11 and 14, which illustrate the connector according to the third embodiment in Figure 17;
- Figures 20 and 21 are views similar to those in Figures 15 and 16 which illustrate the insulating support of the connector according to the third embodiment;
- Figures 22 to 26 are views similar to those in Figures 17 to 21 which illustrate a fourth embodiment in which the ejection spring is according to a first of the variants in which the ejection spring is made as a single piece with the cover;
- Figure 27 is a perspective bottom view of the cover of the connector illustrated in Figure 24;
- Figures 28 to 33 are views similar to those in Figures 22 to 27, which illustrate a fifth embodiment in which the ejection spring is according to a second of the variants in which the ejection spring is made as a single piece with the cover;
- Figures 34 to 39 are views similar to those in Figures 22 to 27, which illustrate a sixth embodiment in which the ejection spring is according to a third of the variants in which the ejection spring is made as a single piece with the cover;
- Figure 40 is a view similar to that in Figure 1, which illustrates one embodiment variant of the retaining lip;
- Figure 41 is a bottom view of the cover of the connector in Figure 40;
- Figure 42 is a view on a larger scale of the detail D42 in 41;
- Figures 43 and 44 are views similar to those in Figures 41 and 42, which illustrate another variant of the stop lip;
- Figure 44A is a detailed view in cross section on the line 44A-44A in Figure 43;
- Figure 45 is a view similar to that in Figure 1, which illustrates a seventh embodiment in which the carrier arm and the retaining lip are located beneath the insulating support;
- Figure 46 is a perspective top view of the cover of the connector in Figure 45;
- Figure 47 is a view on a larger scale of the detail D47 in Figure 46;
- Figure 48 is a perspective bottom view of the cover illustrated in Figures 46 and 47;
- Figures 49 and 50 are two perspective views, with partial cut-away, of the connector illustrated in Figure 45, in which figures the card is illustrated in the process of being inserted into the connector and in the contact position in the connector, respectively;
- Figures 51 and 52 are perspective top and bottom views of the insulating support of the connector according to the seventh embodiment;
- Figures 53 to 56 are views similar to those in Figures 49 to 52, which illustrate an eighth embodiment of a connector according to the invention, in which the carrier arm and the retaining lip extend transversely above the insulating support;
- Figures 57 and 58 are perspective bottom views of a ninth embodiment of a connector in accordance with the teachings of the invention, in which figures the carrier arm and the retaining lip extend longitudinally along one of the lateral faces of the insulating support, the card being illustrated in the process of being inserted and in the contact position in these two figures, respectively;
- Figure 59 is a perspective bottom view of the cover with which the connector illustrated in Figures 57 and 58 is equipped;
- Figure 60 is a view on a larger scale of the detail D60 in Figure 59;
- Figures 61 and 62 are perspective bottom and top views of the insulating support of the connector according to the ninth embodiment;

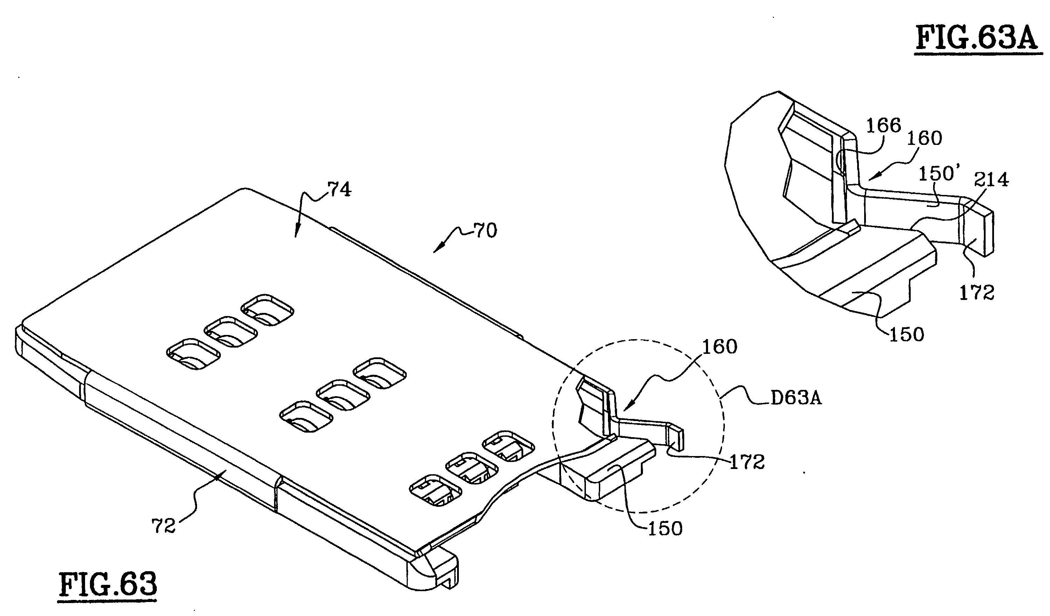

- Figure 63 is a perspective top view of the connector according to the ninth embodiment, which is illustrated without a card;
- Figure 63A is a view on a larger scale of the detail D63A in Figure 63;
- Figures 64 and 65 are views similar to those in Figures 49 and 50, which illustrate a tenth embodiment which is an embodiment variant of the connector according to the seventh embodiment;
- Figures 66 and 67 are perspective views of the cover of the connector according to the tenth embodiment;
- Figures 68 and 69 are perspective views of the insulating support of the connector according to the tenth embodiment;
- Figure 70 is a diagram showing the cut-outs provided in a printed-circuit board for mounting the connector illustrated in Figure 66 and 67;
- Figures 71 to 76 are views similar to those in Figures 64 to 69, which illustrate an eleventh embodiment of the invention which is a variant of the tenth embodiment in which the height of the connector is reduced and in which the cover does not contribute to the vertical retention of the card in the connector;
- Figure 77 is a perspective view on a larger scale which illustrates the connector in Figures 71 and 72 without a card;
- Figures 78 to 83 are views similar to those in Figures 71 to 76, which illustrate a twelfth embodiment which does not form part of the invention and which is a simplified variant of the eleventh embodiment;

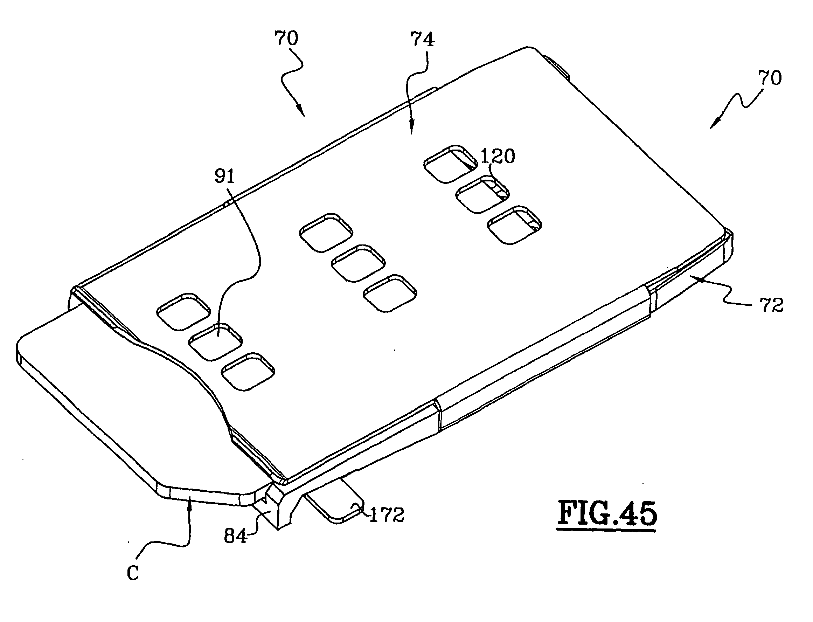

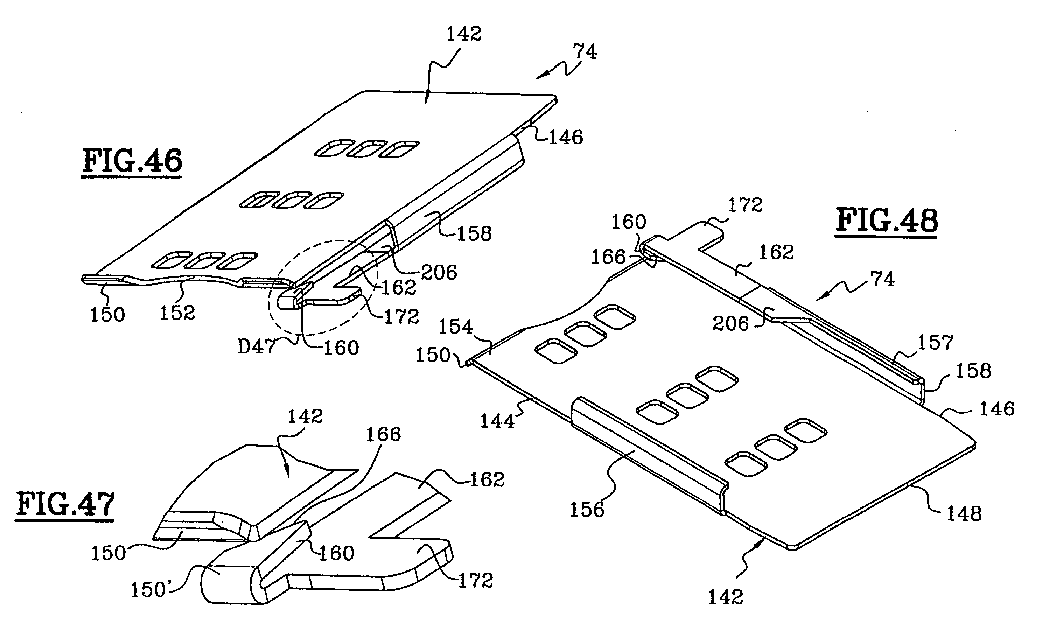

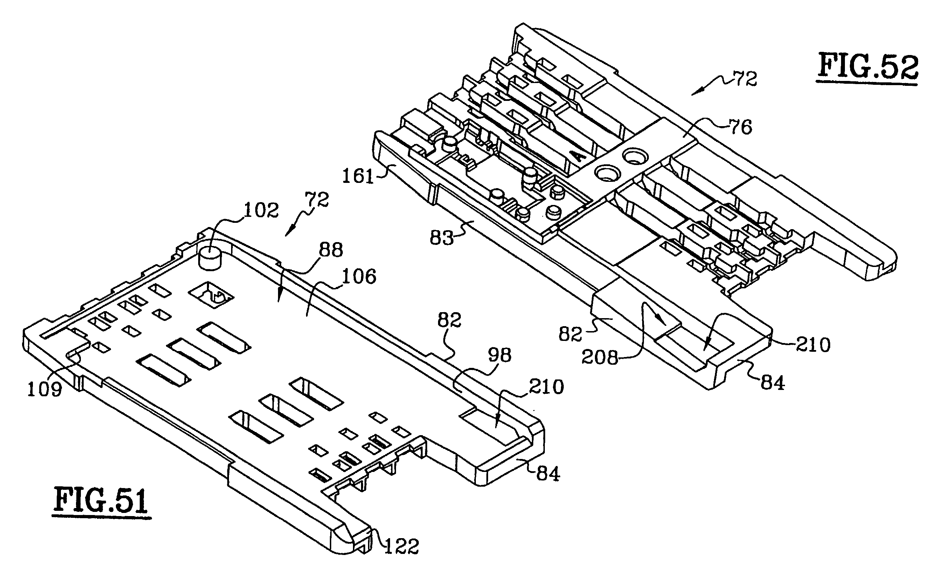

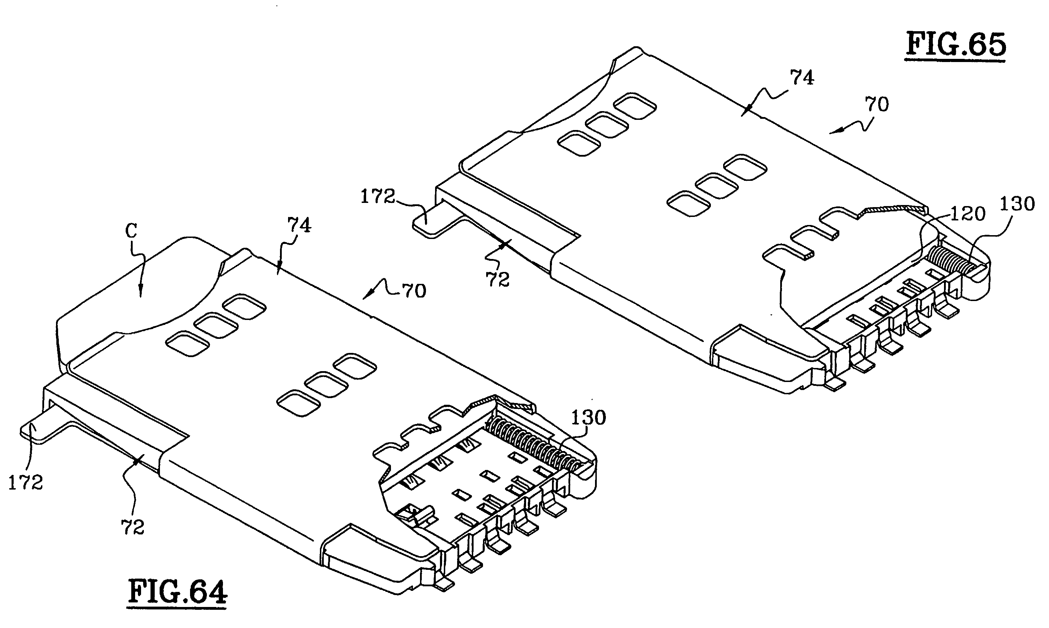

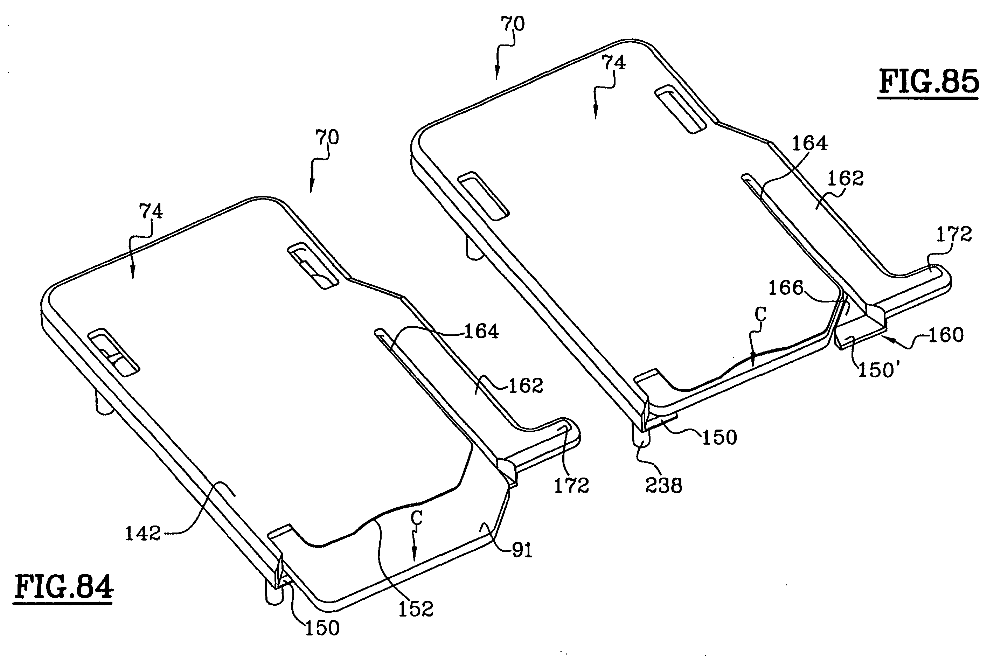

- Figures 84 and 85 are two perspective views, similar to those in Figures 64 and 65, of a thirteenth embodiment of the invention in which the cover of the connector is fitted on top of the contact-carrying insulating support and is fastened directly to the printed-circuit board which carries the contact-carrying insulating support of an ultrathin connector, the retractable means for retaining the card and the elastic means for ejecting the card being of the type of those belonging to the seventh embodiment illustrated in Figures 45 to 52, that is to say the retaining lip can retract vertically downwards and is carried at the free end of a carrier arm of longitudinal orientation;
- Figure 86 is a view similar to that in Figure 85, with the connector illustrated in a top three-quarter rear view;
- Figure 87 is a perspective bottom view of the connector in Figure 86;
- Figures 88 and 89 are views similar to those in Figures 86 and 87, with the card in the process of being ejected;
- Figures 90 and 91 are views similar to those in Figures 86 and 87, which illustrate the connector in its contact-carrying insulating support;
- Figure 92 is a diagram showing how the connector illustrated in Figures 84 to 91 is placed on a printed-circuit board;
- Figures 93 to 100 are views similar to those in Figures 84 to 91, which illustrate the cover according to a fourteenth embodiment of the invention, which is similar to the previous one in that the cover is fitted directly onto the printed-circuit board but in which the cover does not contribute to the vertical retention of the card; and
- Figure 101 is a view similar to that in Figure 99, which illustrates the cover without its ejection spring.

In the description which follows, identical, analogous or similar elements will be denoted by the same reference numbers.

With reference to the appended drawings, the terms vertical, horizontal, front, rear, lower, upper, etc. will be used (in a non-limiting manner) in order to make it simpler to understand the description and the claims.

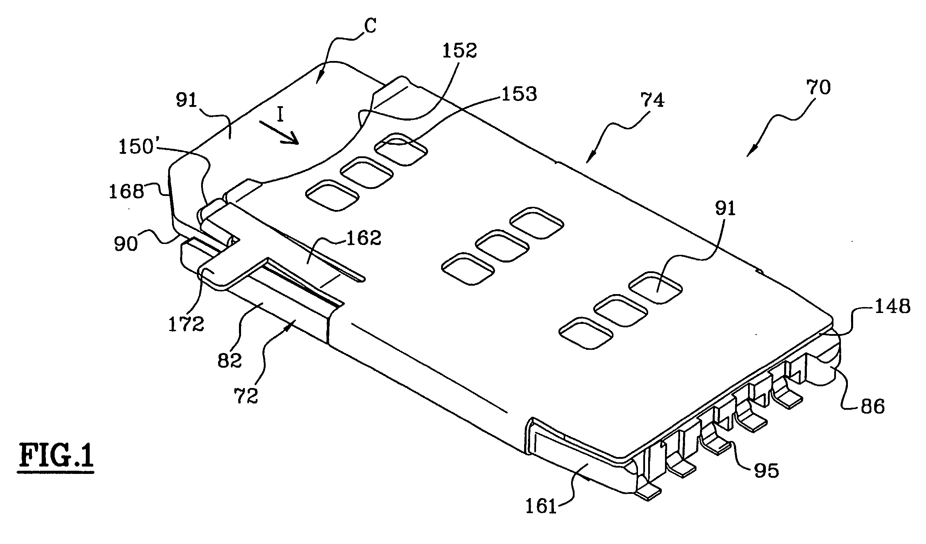

The connector 70 illustrated in Figures 1 to 9 essentially consists of a moulded plastic insulating support 72 and of a fitted cover 74 which is a metal piece, for example made of cut, folded and/or stamped sheet metal.

The connector 70 is designed to accommodate a card C, this being a smart card, for example of the MICROSIM type illustrated in the figures.

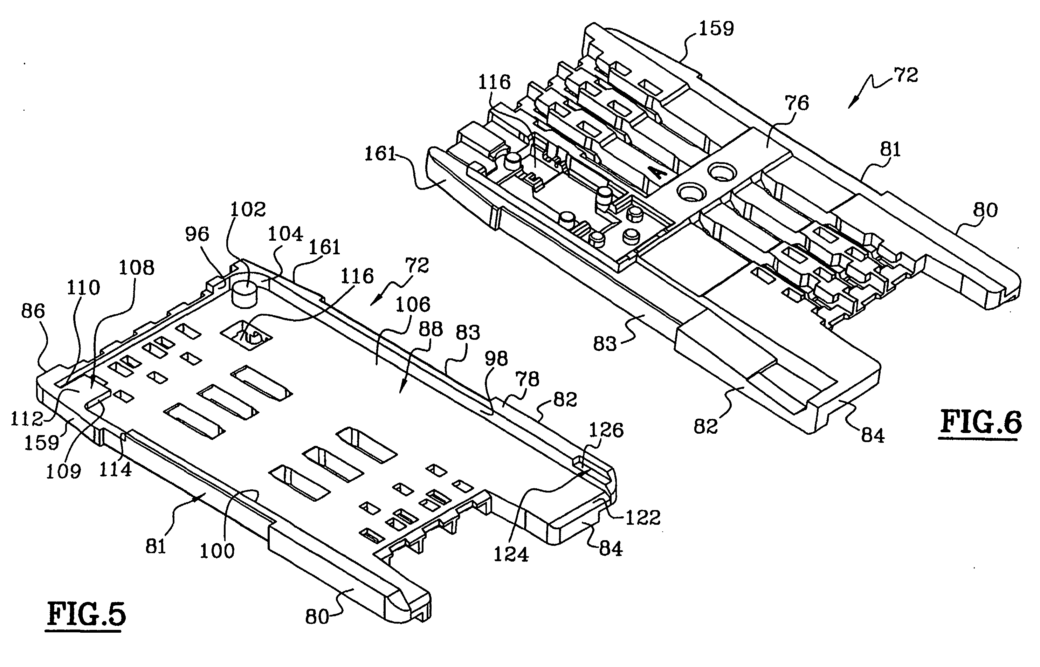

The design of the insulating support 72 will now be described with reference especially to Figures 5 and 6.

The support 72 is a moulded piece having the general shape of a rectangular parallelepiped, which is bounded vertically by a lower plane face 76 and by an upper plane face 78.

The support 72 is also bounded transversely by two longitudinal edges 80 and 82, and it is bounded longitudinally by a front transverse edge 84 and by a rear transverse edge 86.

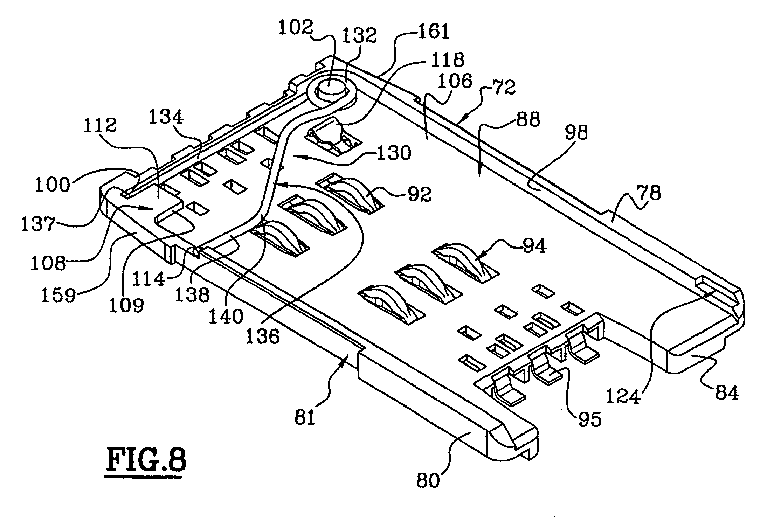

According to a known design, which is described and illustrated in French Patent Application FR-A-2.742.561 for example, the support 72 made of insulating material delimits, in its upper face 78, a housing 88 which has a shape complementary to that of the card C and is intended to at least partly accommodate the latter, the lower face 90 of which includes conducting pads which, when the card C is in its position after it has been inserted into the housing 88, or contact position, are in contact with free contact ends 92 belonging to the contact blades 94 of the connector 70 (see Figure 8).

The housing 88 is bounded longitudinally by a rear transverse edge 96 and is open longitudinally at the front. The housing 88 is bounded transversely by two parallel and opposed longitudinal edges 98 and 100 which are spaced apart transversely by a distance corresponding approximately to the width of the card C, so as to guide the latter in a sliding manner during its longitudinal insertion in the direction I, and in both senses, in the housing 88. By way of a variant (not shown), and especially when the connector is of the type having six contacts and no switch for detecting the presence of a card, the position of the stud 102 may be arranged in the transversely opposite manner.

Near the rear transverse edge 96, the housing 88 has a vertical cylindrical stud 102 which extends, near the corner 104 joining the edge 96 to the edge 98, from the plane of the lower plane face 106 of the housing 88 as far as level with the plane of the upper plane face 78 of the insulating support 72. The stud 102 is preferably moulded with the insulating support 72.

The longitudinal edge 100 of the housing 88 has, again near the rear transverse edge 96, a projecting part 108 of rectangular outline which, together with the rear transverse edge 96, delimits a slot 110.

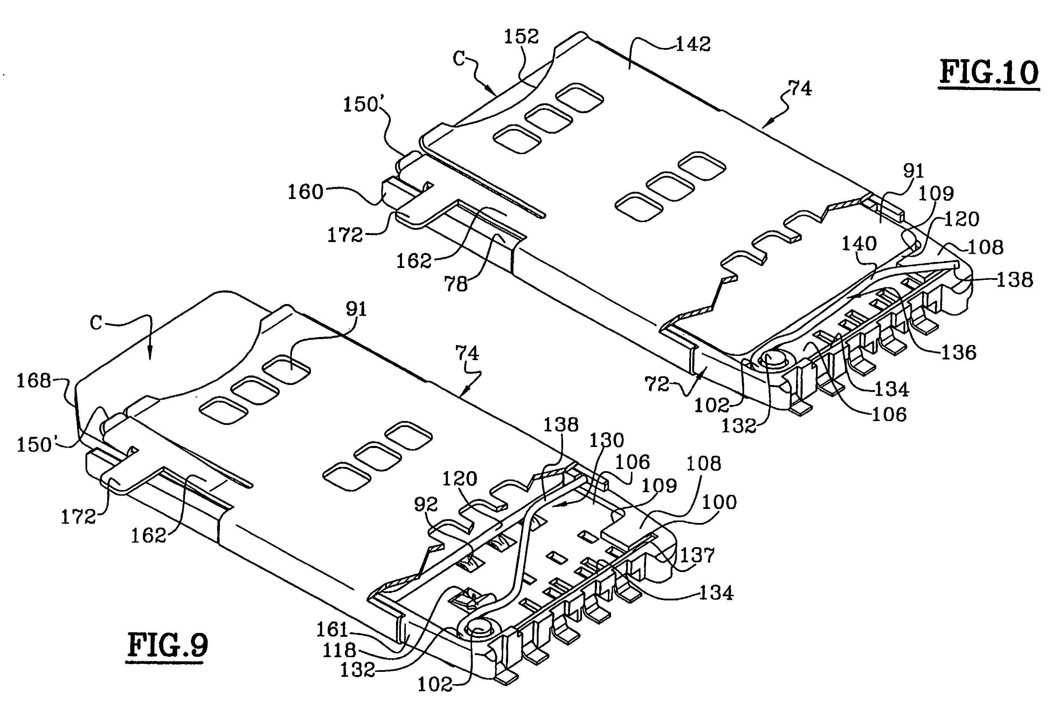

The front transverse edge 109 of the projecting part 108 forms a mechanical stop for the end of insertion travel of the card C in the housing 88 when the rear transverse edge 120 of the latter comes into longitudinal bearing contact with the stop 109, as may be seen especially in Figure 10.

As may be seen in Figure 5, the plane of the upper face 112 of the part 108 is offset vertically downwards with respect to the plane of the upper face 78 of the insulating support 72. In this way, a stop 114 is formed in the longitudinal edge 100 s and it consists of a facet having a rearwardly facing vertical orientation, that is to say facing the rear transverse edge 86 of the support 72.

The bottom 106 of the housing 88 also has an opening 116 for passage of a member 118 for operating a switch (not shown) for detecting the presence of the card C in the contact position in the connector 70, the card engaging with the member 118 via its rear transverse edge (see Figure 8).

The housing 88 has, near the front transverse edge 84, a chamfer 122 facilitating the longitudinal insertion of the card C into the housing 88.

The longitudinal edge 88 has, near the front transverse edge 84, a recess 124 which is open longitudinally towards the front and which is bounded vertically downwards by a horizontal facet 126 which extends approximately in the same plane as that of the upper face 112 of the projecting part 108, at the rear of the insulating support 72.

According to a known design, the external longitudinal edges, or lateral faces, 80 and 82 of, the insulating support 72 have, in the central part, recesses 81 and 83 for fitting and fastening the cover 74.

According to one characteristic of the invention, the connector 70 has elastically deformable means 130 which permanently stress the card C in order to eject the latter from the housing 88. The resilient means 130 for ejecting the card C engage with the rear transverse edge 120 of the latter when it is in the contact position in the connector 70.

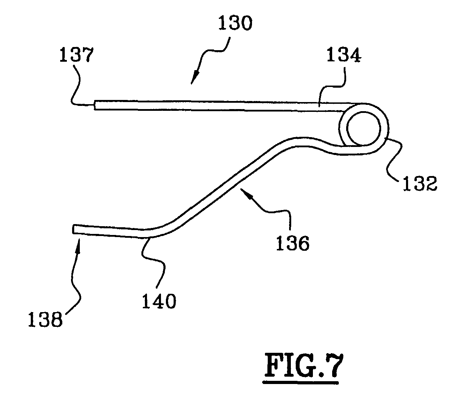

In the first embodiment of the invention, the resilient means 130 consist of a spring in the form of a bent metal wire , which is especially illustrated in detail in Figure 7.

The spring 130 has in particular a one-turn coil 132, the dimensions of which are such that it may be fitted vertically around the centring and positioning stud 102.

Beyond the coil 132, the spring 130 has a main rear fitting strand 134 which is a straight strand intended, in the position in which the spring 130 has been fitted and as may more particularly be seen in Figures 9 and 10, to extend along the rear transverse edge 96 of the housing 88 with its free end 137 accommodated in the slot 110.

The main rear strand 134 is in vertical bearing contact with the bottom 106 of the housing 88 so as, by engaging with the coil 132 which surrounds the stud 102, to define a good seat for the spring 130 in the bottom of the housing 88.

Beyond the coil 132, the spring 130 also has a main front ejecting strand 136 which is a strand bent approximately in the form of an S so that its free end portion 138 extends at rest - i.e. in its free state illustrated in Figure 7 - substantially transversely in order to be capable of engaging with the rear transverse edge 120 of the card C.

The free end portion 138 is joined to the main part of the ejecting strand 136 by a bend 140 whose convexity is oriented longitudinally towards the front of the housing 88, i.e. facing the rear transverse edge 120 of the card C.

The entire ejecting strand 136 extends in an upper horizontal plane with respect to the lower plane in which the rear main strand 134 extends, which corresponds to the midplane of the upper half of the thickness of the card C, the latter being stressed vertically by the contacts 92, its upper face 91 being in bearing contact with the facing lower face of the cover 74.

In the position in which it is fitted into the support 72 and in its state illustrated in Figure 8, i.e. in its prestressed rest state in which it is not stressed by the card C, the free end portion 138 is fitted so as to be slightly prestressed so as to be in abutment against the vertical stop facet 114 of the longitudinal edge 100, this engagement defining a precise and constant geometrical rest position of the portion 138 and of the bend 140 in the housing 88 in the support 72.

The amount of prestress is preferably at least enough to overcome the frictional forces, and especially those resulting from the friction of the contacts against the lower face 91 of the card, so as to ensure that the card is ejected and that it reaches a position in which the end 138 of the spring is in bearing contact with the stop 114.

As may be seen especially in Figure 8, the main ejecting strand 136 of the spring 130 extends in a plane lying above the plane of the upper face 112 of the projecting part 108, so as to be able to be elastically bent in a direction corresponding to the strands 134 and 136 coming closer together, by passing above the projecting part 108 and above the main fitting strand 134 When the card C is in the contact position, i.e. when - as may be seen in Figure 10 - its rear transverse edge 120 is in bearing contact with the stop edge 109 of the projecting part 108.

As may be seen especially in Figures 9 and 10, the diameter of the wire of the spring 130, the height of the stop 109 and the thickness of the card C are such that the rear transverse edge 120 of the latter engages simultaneously, via its upper portion, with the ejecting strand 136 of the spring 130 and, via its lower portion, with the stop 109.

The thickness of the card C and the depth of the housing 88 are also such that, when the card is in position in the housing 88 and stressed vertically by the contacts 92, its upper face 91 is more or less flush with the upper face 78 of the insulating support 72.

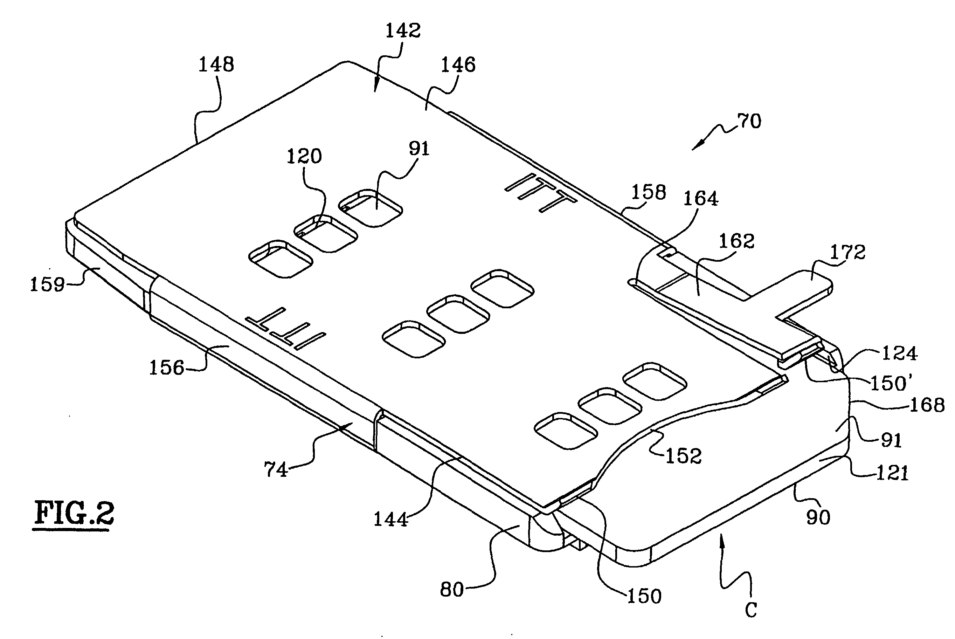

The cover 74 will now be described in detail with reference especially to Figures 2 to 4.

The cover 74 essentially consists of an upper plate 142 which has a rectangular general shape and is bounded transversely by two parallel and opposed longitudinal edges 144 and 146 and which is bounded longitudinally by a rear transverse edge 148 and by a front transverse edge 150.

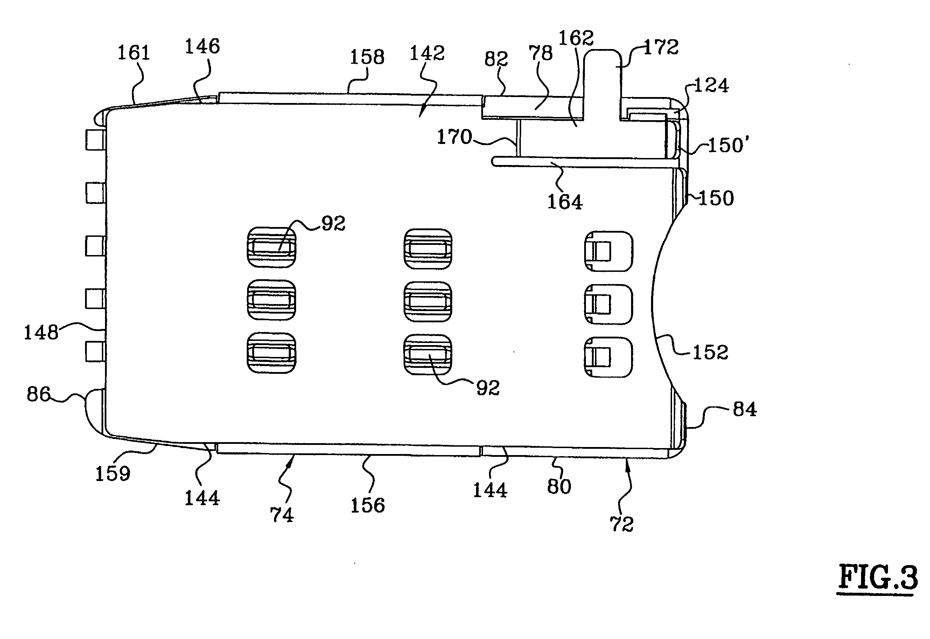

The general dimensions of the upper plate 142 are such that, as may be seen in Figure 3, it covers virtually the entire upper face of the insulating support 72.

The front transverse edge 150 has a central cut-out 152 having the outline of a circular arc and it is slightly bent back upwards in order to form a chamfer which, in association with the chamfer 122 on the insulating support 72, makes it easier to insert the card C into the housing 88 which is closed vertically upwards by the internal face 154 of the upper plate 142 of the cover 74.

The cover 74 has, near its front edge with the cut-out 152, a row of holes 153 which, in the absence of a card, make it possible, for the purpose of fastening the connector to a printed-circuit board, to solder the connection ends 95 of the contact blades 92, these ends lying vertically in line with the holes 153.

In a known manner and in order to fit and fasten the metal cover 74 onto the insulating support 72, in its fitted position which is illustrated especially in Figures 2 and 3, the latter has two vertically bent-over edges 156 and 158 which extend from the longitudinal edges 144 and 146, along the vertical faces of the recesses 81 and 83, and which are then bent-over horizontally forming the edges 155 and 157 which extend into complementary housings under the lower face 76 of the insulating support 72.

The cover 74 may be fitted onto the insulating support 72 by longitudinally introducing, from the rear forwards, the cover 74 onto the insulating support 72, the bent-over edges 156 and 158 being temporarily moved apart transversely, against their intrinsic elasticity, because of the shaping, as chamfers 159 and 161, of the rear ends of the edges 80 and 82 of the insulating support 72.

According to one of the main characteristics of the invention, the cover 74 includes retractable means for retaining the card C in its position after it has been inserted into the housing 88 of the connector 70.

Depending on the various embodiments of the invention, and more particularly according to the first embodiment, the retaining means will be made, by bending, cutting and/or stamping, as one piece with the cover 74.

The retractable retaining means 160 consist here of a retaining lip, or nose, which is located at the front free end 150' of a carrier arm 162 which is made as a single piece with the cover 74.

More particularly, the carrier arm 162 forms part of the upper plate 142 of the cover 74 and is bounded with respect to the latter by a longitudinal slot 164 which extends rearwards from the front edge 150 of the upper plate 142.

The retaining lip 160 is also made as one piece at the front free end of the arm 162 by being bent horizontally under the latter and by being partially accommodated in the facing recess 124 in the insulating support 72, in the absence of a card or in the presence of a card in the contact position.

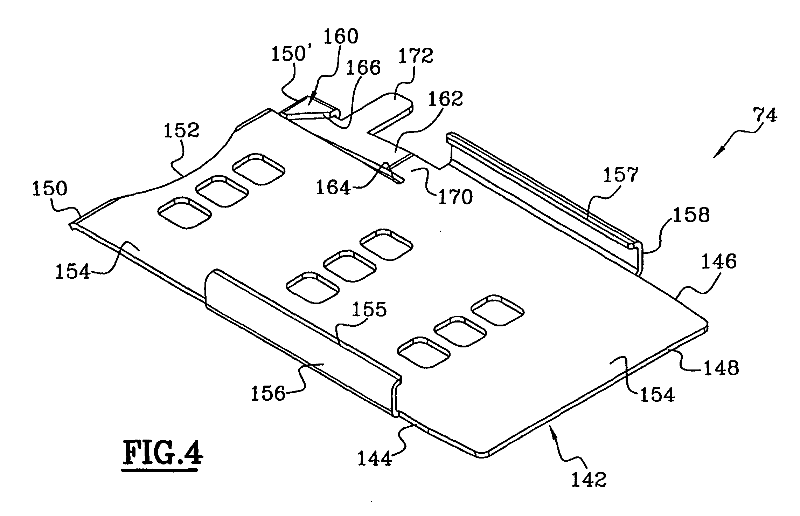

Thus, in its free state illustrated especially in Figures 3 and 4 and in the presence of a card in the contact position, the retaining lip 160 extends below the plane of the internal face 154 of the upper plate 142 so that its rear transverse edge 166 forms a stop facet which extends vertically inside the housing 88.

In the embodiment illustrated in the figures, the edge 166 is a corner face cut at approximately 45° to the longitudinal direction I of insertion of the card C into the housing 88 and this 45° inclination corresponds to that of the standardised corner face 168 formed in the front transverse edge 121 of the MICROSIM card. Thus, the retractable retaining lip 160 thus constitutes a means of polarising the direction and orientation of the card in the connector 70.

This is because, if the card is inserted in an incorrect position, the retaining lip cannot exert its function of retaining the card C in the absence of the corner face, and the card is therefore ejected as soon as the user releases the insertion force he has applied to the card.

The carrier arm 162 behaves in the manner of an elastically deformable beam which is capable of bending vertically, from its free rest state, especially upwards, the "pivot" pin of the carrier arm 162 consisting of a region 170 being close to the rear base of the carrier arm 162.

The pivot region 170 may have a fold so as to give the carrier arm 162 a prestress inclination with respect to the horizontal plane of that part of the cover to which it is joined.

In order to intentionally deform the carrier arm 162 elastically, from its free rest state, it is provided with a gripping and actuating tab 172 which extends transversely outwards, in the plane of the carrier arm 162 and above the upper face 78 of the insulating support 72, so as to project transversely beyond the longitudinal edge 82.

The shape of the actuating tab, and especially its orientation, are tailored to each application and especially to the direction in which the user desires to be able to act on the tab, for example from the front face, from above, from below, etc.

In the first embodiment, the actuating and gripping tab 172 thus makes it possible to lift, vertically, the carrier arm 162, and therefore the retractable retaining lip 160, so that it no longer extends vertically inside the housing 88, that is to say it no longer extends opposite the corner face 168 of the front transverse edge 121 of the card C when the latter is in position in the housing 88 in the connector 70.

The front free end edge 150' of the carrier arm 162, which extends vertically below the latter via the retaining lip 160, constitutes a cam profile - in the form of a chamfer or inclined face - which engages with the front transverse edge 120 of the card C when the latter is inserted longitudinally, from the front rearwards, into the housing 88 in the connector 70 and so as to make the retaining lip 160 move aside automatically, due to the elastic deformation of the carrier arm 162.

The operating mode of the first embodiment of the connector 70 illustrated in Figures 1 to 10 will now be described.

When a card C is inserted into the connector 70 in the direction I, therefore starting from the state of the connector 70 illustrated in Figure 3, the front transverse edge 120 of the card C engages with the cam profile 150' in order to move the retaining lip 160 aside.

After this lip has been moved aside, the insertion movement of the card C in the housing 88 continues, rearwards, the retaining lip 160 being in bearing contact with the upper face 91 of the card C throughout the entire insertion movement of the latter (see Figures 1 and 2).

Towards the end of the insertion travel of the card C, the front transverse edge 120 of the latter preferably engages with the bend 140 of the main ejecting strand 136 of the ejection spring 130 in order to cause the spring to bend, tensioning it, until the front transverse edge 120 of the card C butts against the vertical facet 109. This maximum insertion of the card is facilitated by the presence of the cut-out 152 in the front edge 150 of the cover 74.

In this position of maximum insertion travel of the card C in the housing 88, the card C becomes automatically locked against the elastic force which is applied to it by the ejection spring 130.

This automatic locking occurs when the retaining lip 160 "drops" opposite the corner face 168 of the card C, the length of the carrier arm 162 and the shape of the lip 160 with its stop edge 166 being, of course, such that this drop is possible when the card C is in abutment in the bottom of the housing 88.

It is the intrinsic elasticity of the optionally prestressed carrier arm 162 which returns the lip 160 elastically downwards. As soon as the user has felt that the card C has come into abutment in the housing 88, he may release the longitudinal insertion force that he has applied to the front transverse edge 121 of the card C, the latter being subjected to a very slight return travel until the corner face 168 comes into bearing contact with the stop edge 166 of the lip, this travel corresponding to the functional clearance existing between these two elements when the front transverse edge 120 of the card C is bearing against the stop 109.

If the user has not pushed the card C sufficiently far into the housing 88, it will not be locked and will come back out, at least partially, due to the action of the spring 130.

In order to cause the automatic ejection of the card, totally or partially depending on the value of the ejection force applied to it by the spring 130, the user merely has to retract the retaining lip 160 with its stop edge 166. For this purpose, the user acts on the actuating tab 172 in order to lift it until the lip is free.

At this moment, the spring 130 ejects the card C. Given that the spring is acting permanently on the card C, the ejection takes place instantly and before the user has had time to release the force he has applied to lift the tab 172 and therefore the lip 160. For this purpose, it is advantageous and preferable for the actuating tab not to lie facing the slot for inserting the card into the connector, that is to say it preferably lies outside the ejection path of the card C.

The frictional forces being applied against the card and the preloading of the ejection spring are preferably such that the card is slowed down and is not fully ejected out of the connector 70. It is therefore in a position again corresponding to that illustrated in Figures 1 and 2, in which the user may conclude by extracting it longitudinally forwards.

The design according to the invention is particularly advantageous in that the connector 70 equipped with its means for automatically ejecting the card has very small dimensions, these dimensions being identical to that of the same connector - without ejection means - of the type described and illustrated in document FR-A-2,742,561, apart from, of course, the gripping and actuating tab 172 which projects slightly transversely.

In addition, the same insulating support 72 may be used to produce connectors with or without ejection means, the presence of the latter depending on the design of the cover 74 fitted onto the support 72 and on whether or not an ejection spring 130 is provided.

The same insulating support 72 with its ejection spring 130 may also be used to produce connectors in which the card-retaining means are independent of the cover and/or the support.

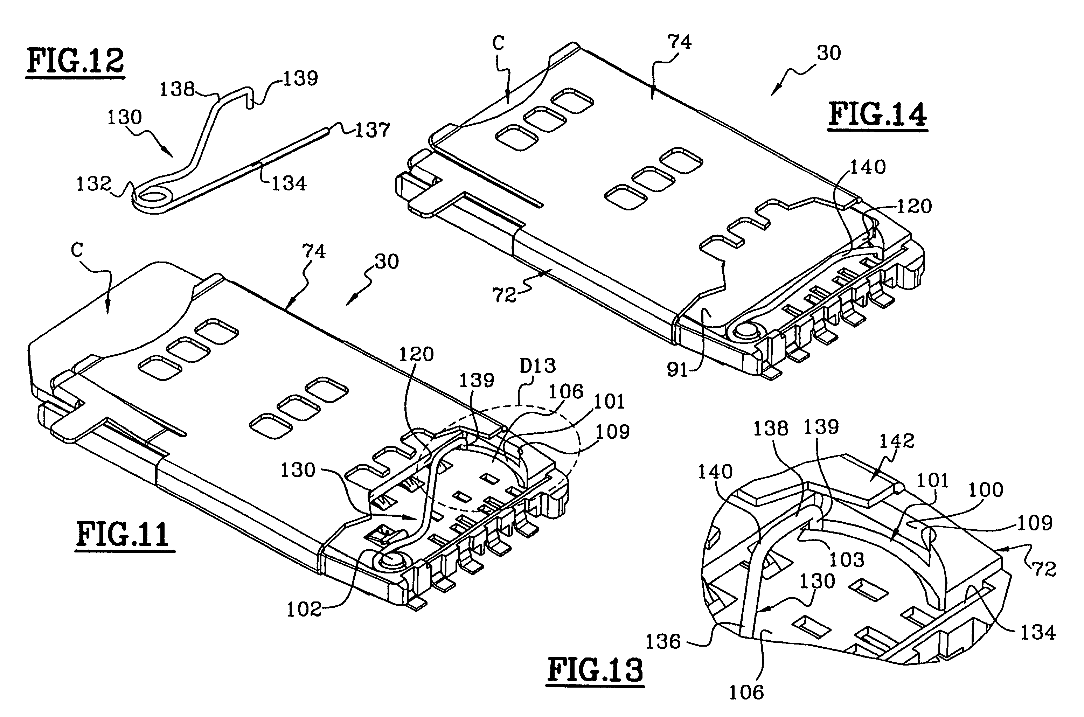

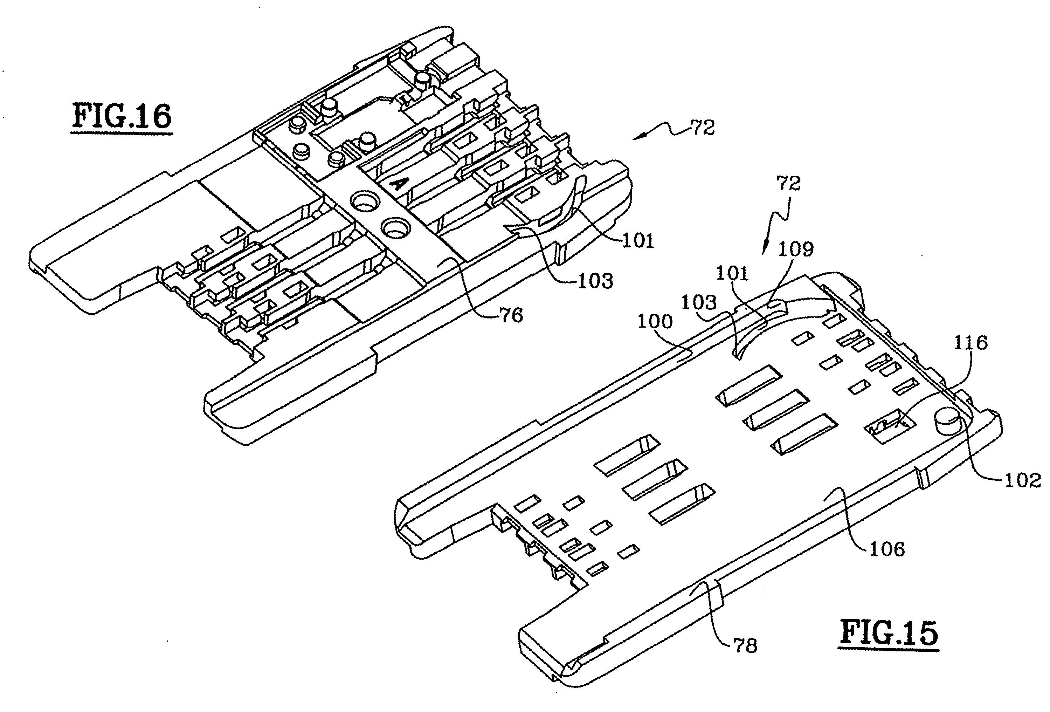

In the second embodiment illustrated in Figures 11 to 16, the ejection spring 130 is slightly modified so as to increase the bending travel of its strand 136 and the extent to which the latter is guided during its movements.

As may be especially seen in Figure 12, the straight free end portion 138 of the strand 136 is extended vertically downwards by a vertical end 139, the free end 141 of which is accommodated in an open groove in the form of a circular arc 101 formed in the bottom 106 and centred on the stud 102.

As may be seen in Figure 13, it is the vertical end 139 engaging with the front bottom 103 of the groove 101 which determines the rest position of the ejection strand 136, in the absence of a card C.

The stop 109 for the end of insertion travel of the card C is formed directly in the guiding edge 100.

The other elements and parts of the connector according to the second embodiment, as well as its mode of operation, are identical to what was described previously.

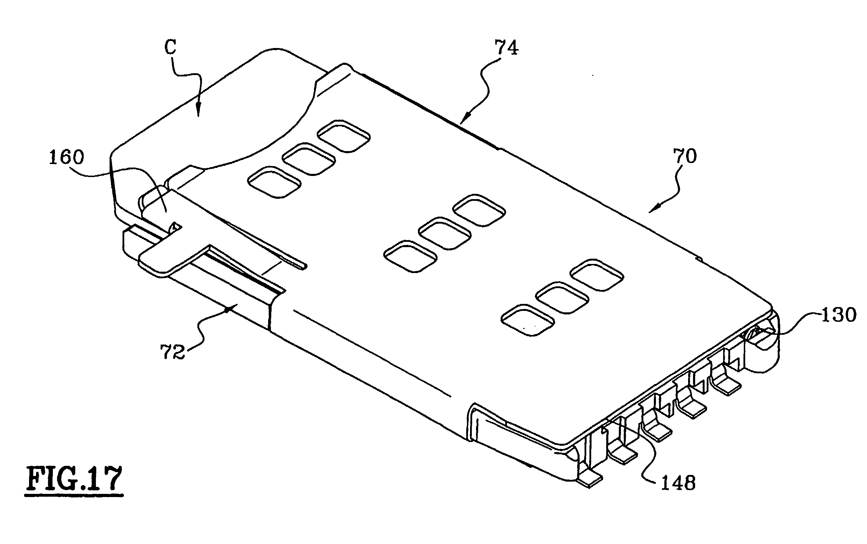

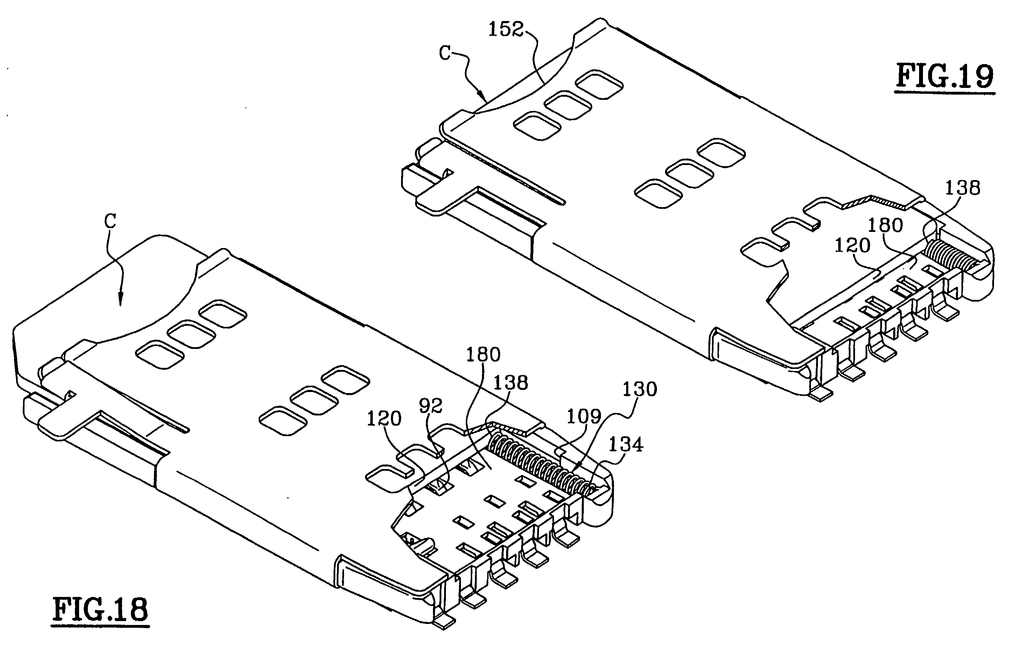

The embodiment illustrated in Figures 17 to 21, which differs from the two previous ones essentially by the design of the ejection spring, which is a fitted spring made in the form of a compression coil spring, will now be described.

The coil spring 130 is straight and extends longitudinally in a complementary rectangular housing 180 which is formed in the bottom 106 of the housing 88 and is bounded by a front face 182 and by a rear face 184. The spring 130 is fitted slightly compressed in the housing 180, with its front longitudinal ejecting end 138 and its rear longitudinal fitting end 134 in longitudinal bearing contact with the end faces 182 and 184 of the housing 180, respectively.

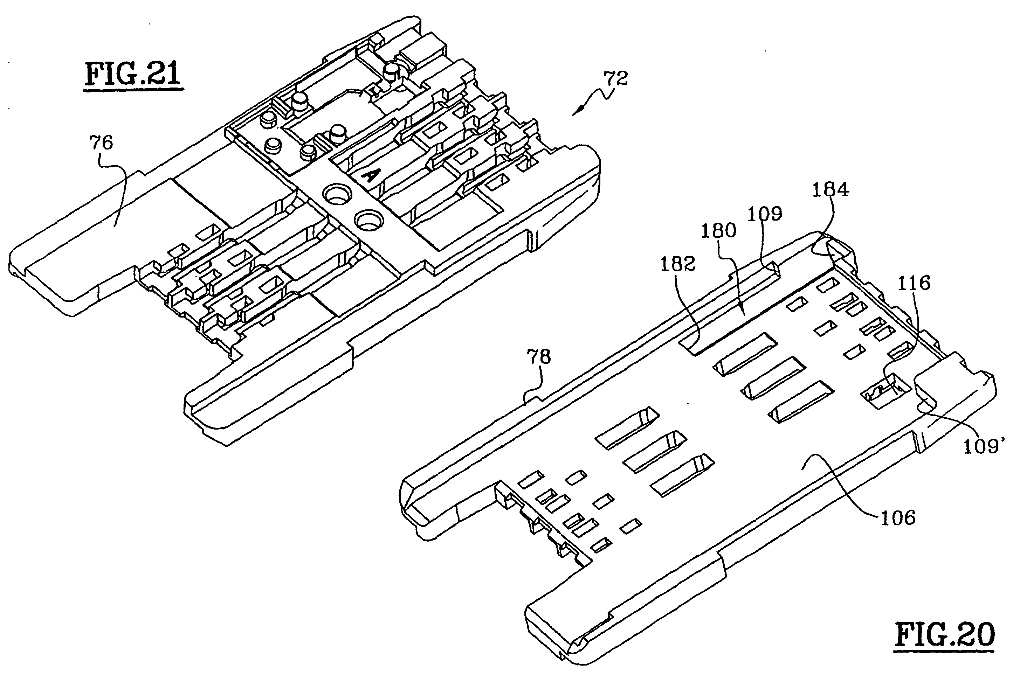

When the card C is being inserted into the connector 70, the rear transverse edge 120 of the latter engages with the front end coil 138 of the spring 130 in order to compress the latter until the edge 120 butts against the stop 109 and the opposite stop 109'. In so far as the coil spring 130 does not require the presence of a vertical stud 102, used in the previous embodiments for fitting and centring the wire springs, it is in fact possible to provide a second stop 109' for the end of insertion travel of the card C (see Figure 20).

The other elements and parts of the connector according to the third embodiment, as well as its mode of operation, are identical to what was described previously with reference to the first two embodiments.

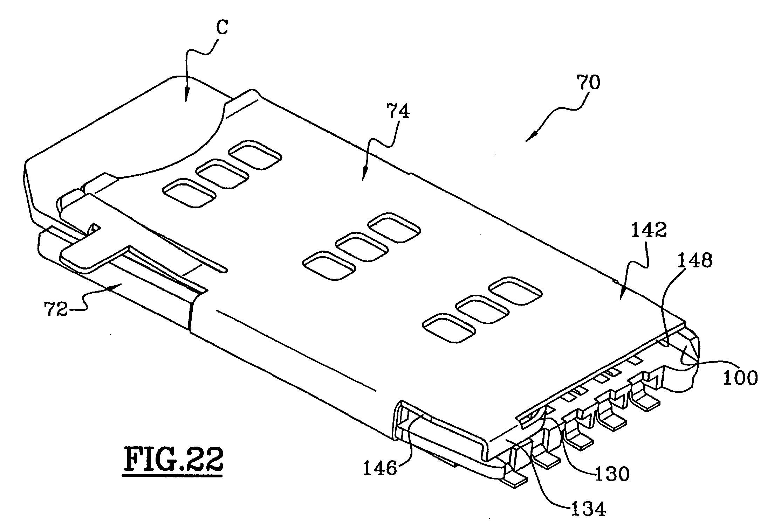

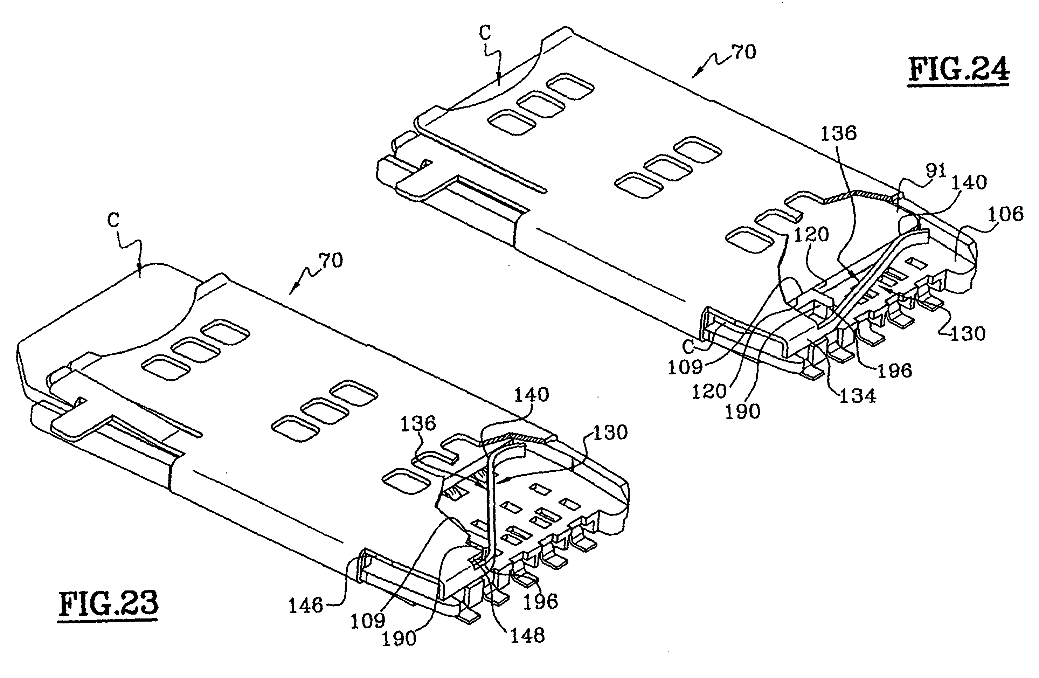

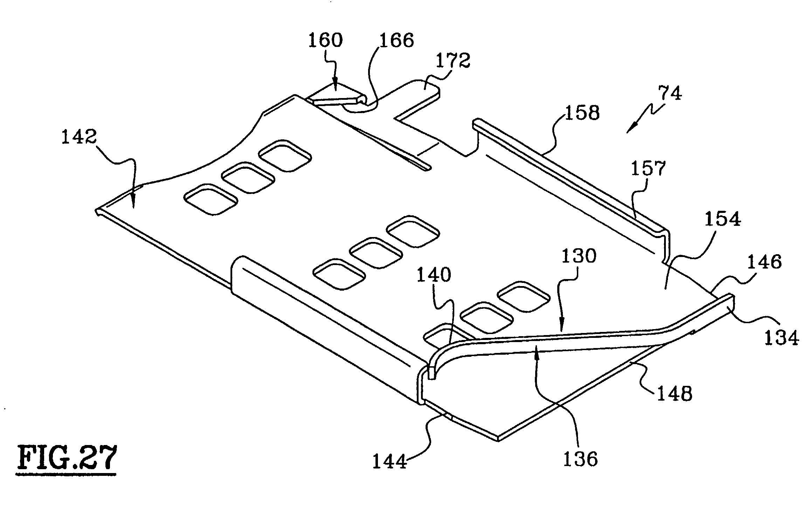

The fourth embodiment, illustrated in Figures 22 to 27, differs from the previous ones by the design of the ejection spring which is made in the form of an elastically deformable strip made as one piece with the cover 74.

More specifically, the resilient ejection strip 130 is a strip bent through 90° vertically downwards with respect to the horizontal plane of the plate 142 of the cover 72.

It is separated, before its embedded end 134 is bent, by a slot which delimits the rear transverse edge 148 after bending.

Beyond its transverse "embedding" end 134, the strip 130 extends transversely inside the housing 88 in the manner of an elastically deformable beam so that it can bend, under the action of the card C, longitudinally rearwards.

The strip is bent into an ejection branch 136 which has an ejection bend 140, the convexity of which faces forwards opposite the edge 120 of the card C, and which extends with a slight vertical clearance below the internal face 154 of the plate 142.

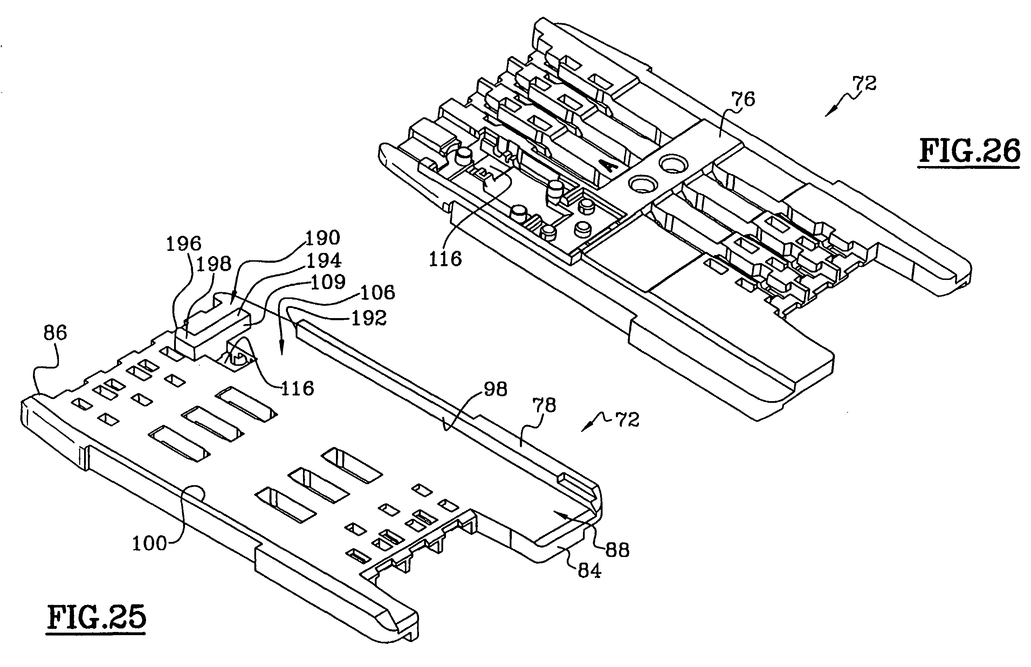

As may be seen in Figure 25, the insulating support has, in the bottom 106 of the housing 88, an L-shaped projecting part 190 which is located in the corner near the rear edge 86 and the longitudinal edge 98, the latter being interrupted at 192.

The front vertical face 109 of the transverse branch 194 of the L-shaped part 190 forms the stop for the end of insertion travel of the card C, while the rear free end 196 of the longitudinal branch 198 engages with the strip 130 in order to define the longitudinal rest position of the bend 140.

Such a design is advantageous in that it makes it possible to reduce the number of components of the connector and thus to simplify its assembly.

In addition, the engagement of the branch 136, 140 with the edge 120 of the card C allows operation without damaging the edge 120 and without risk of the branch 136 accidentally escaping above or below the edge 120, since the height of the branch is approximately equal to the thickness of the card C and to the spacing between the bottom 106 and the internal face 154.

The other elements and parts of the connector according to the fourth embodiment, as well as its mode of operation, are identical to what has been described above with reference to the first two embodiments.

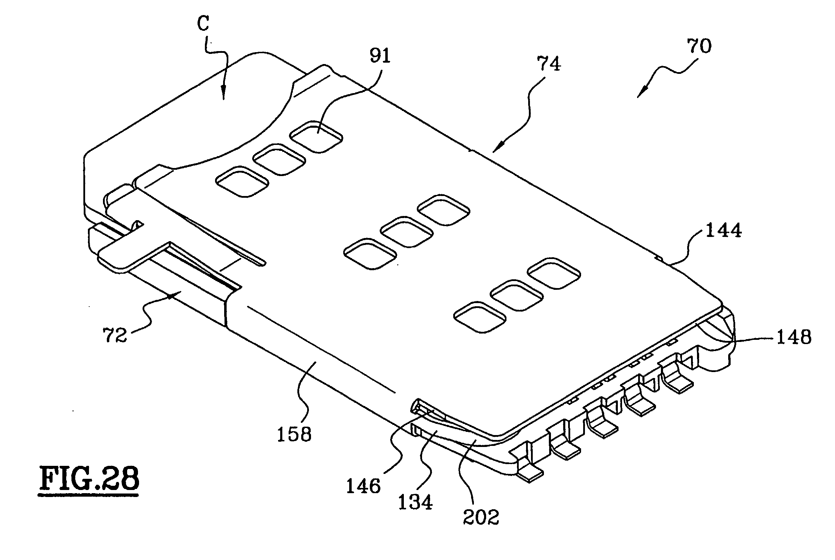

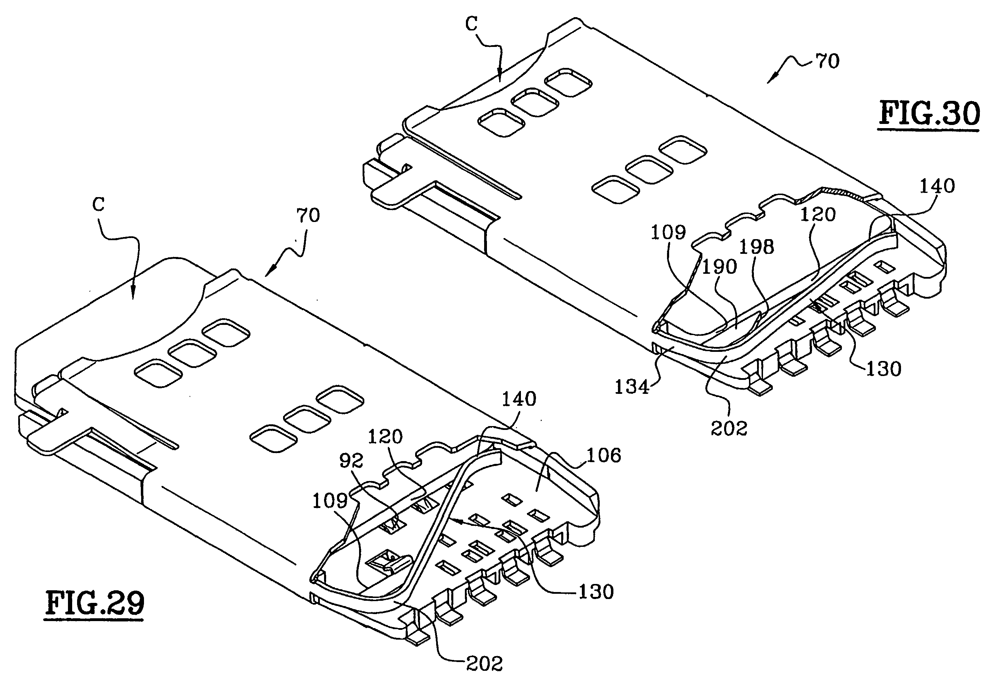

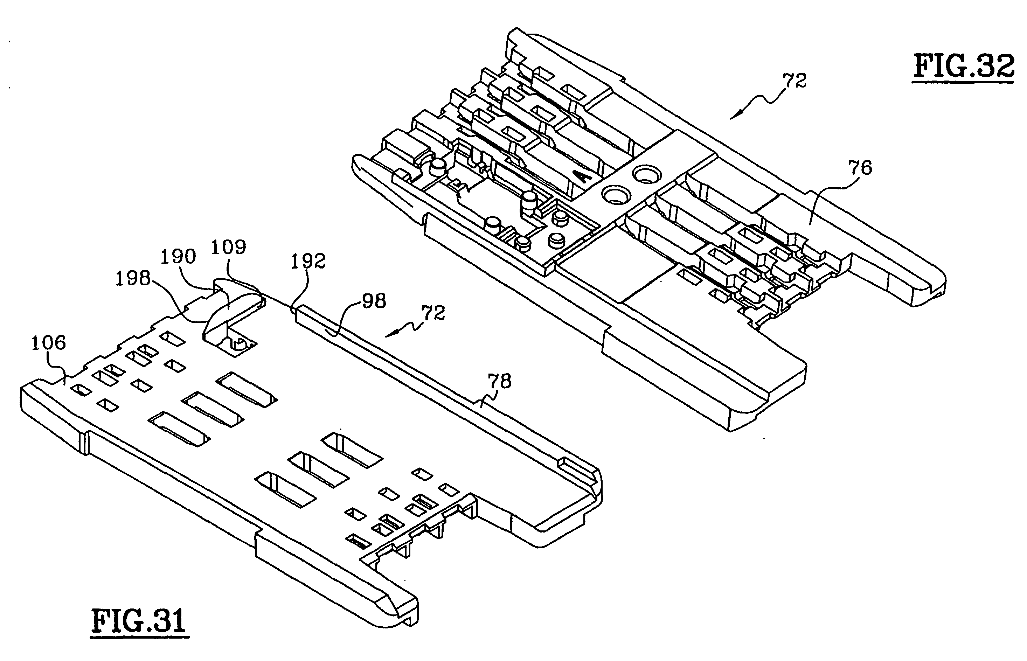

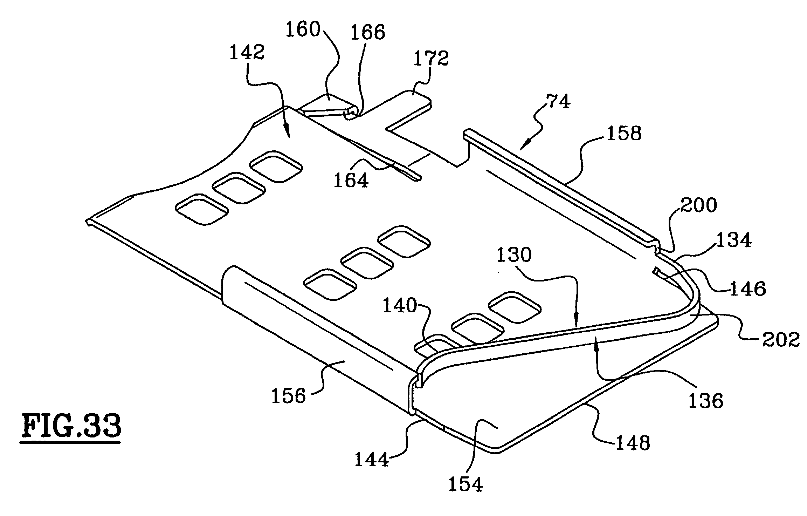

The fifth embodiment, which is illustrated in Figures 28 to 33, differs from the previous one only by a slight difference in the conformation of the resilient ejection strip 130.

The latter in fact extends beyond the rear end 200 of the vertically bent-over edge. Thus its fastening or connecting end 134 extends longitudinally and is joined to the ejection branch 136 by a bend 202, the concavity of which engages with the rear end face 198, of complementary profile, of the projecting part 190 which is no longer L-shaped but which is in the form of a projecting transverse bar.

The other elements and parts of the connector according to the fifth embodiment, as well as its mode of operation, are identical to what has been described previously with reference to the first two embodiments.

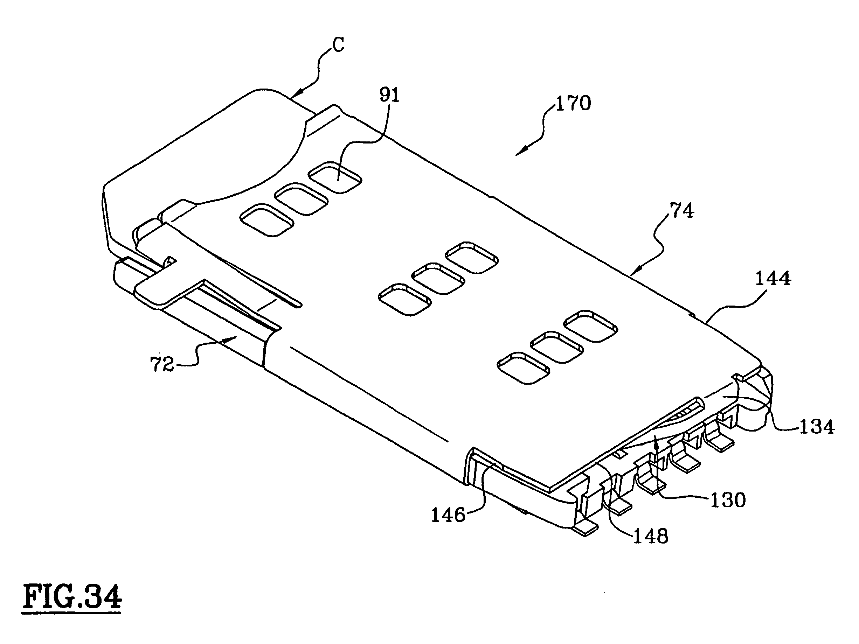

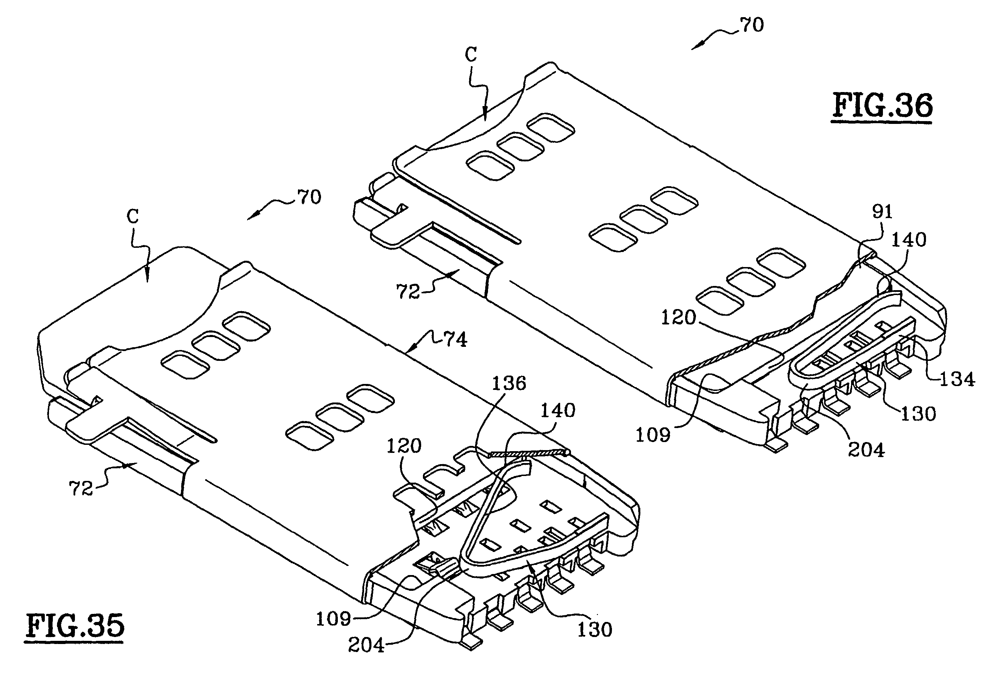

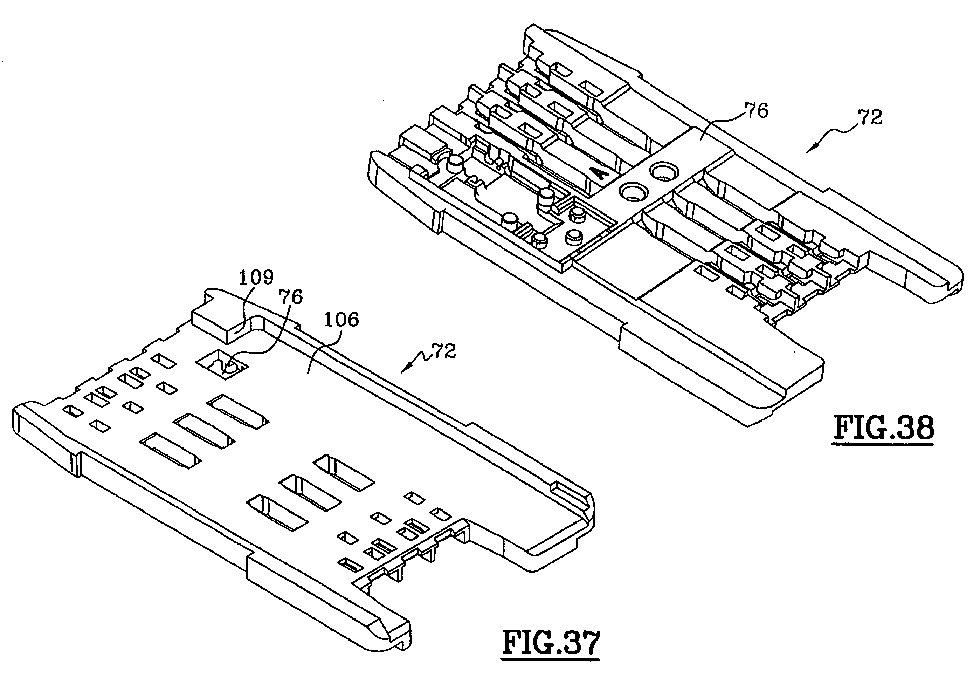

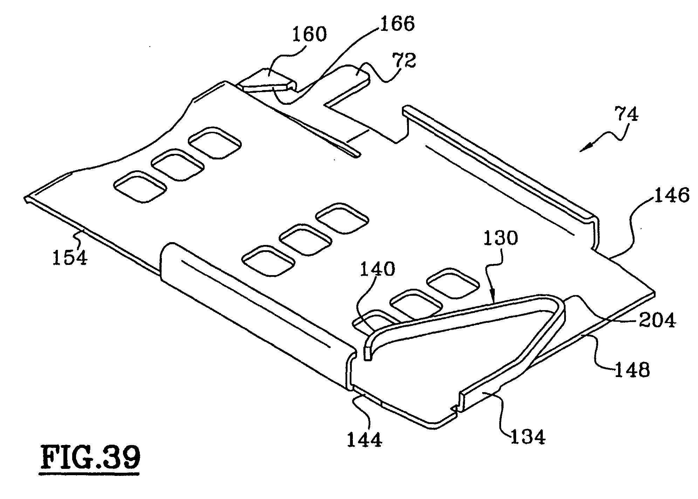

The sixth embodiment, illustrated in Figures 34 to 39, is of the same type as the previous two embodiments, i.e. the ejection spring 130 is made as a single piece with the cover in the form of a bent strip which in this case has a hairpin-shaped profile.

If it is compared with the fourth embodiment, it may be seen that the strip 130 extends from its root 134 transversely in the opposite direction and that its main ejection branch 136 is joined to it by a U-shaped bend 204.

The ejection spring 130 thus has a very great elasticity.

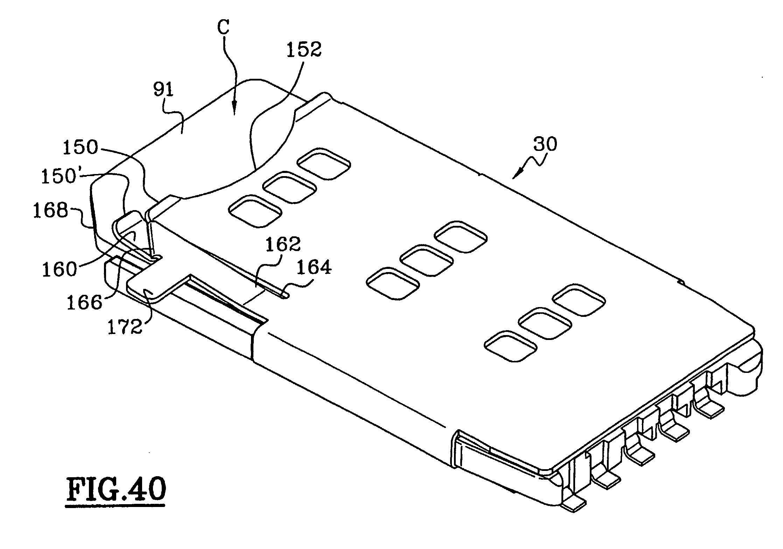

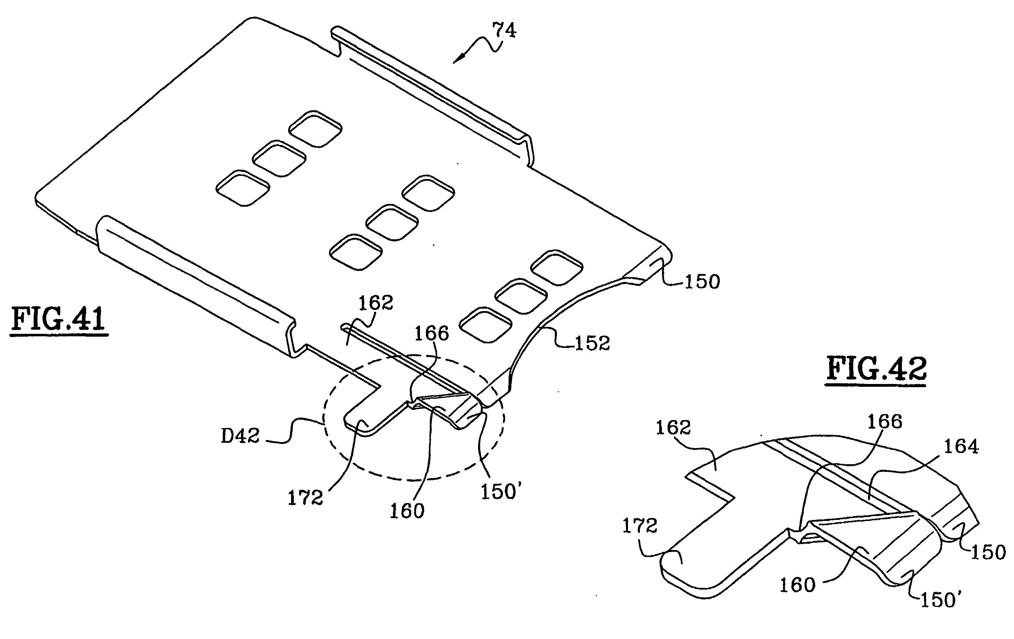

The embodiment variant of the retaining lip, which is illustrated in Figures 40 to 42, differs from its previous embodiment in that the lip is not bent below the arm 162 but is made in the form of a free end part of the arm 162, which is offset vertically downwards and which is bounded, with respect to the main body of the arm 162, by a pleat 166 inclined at 45°.

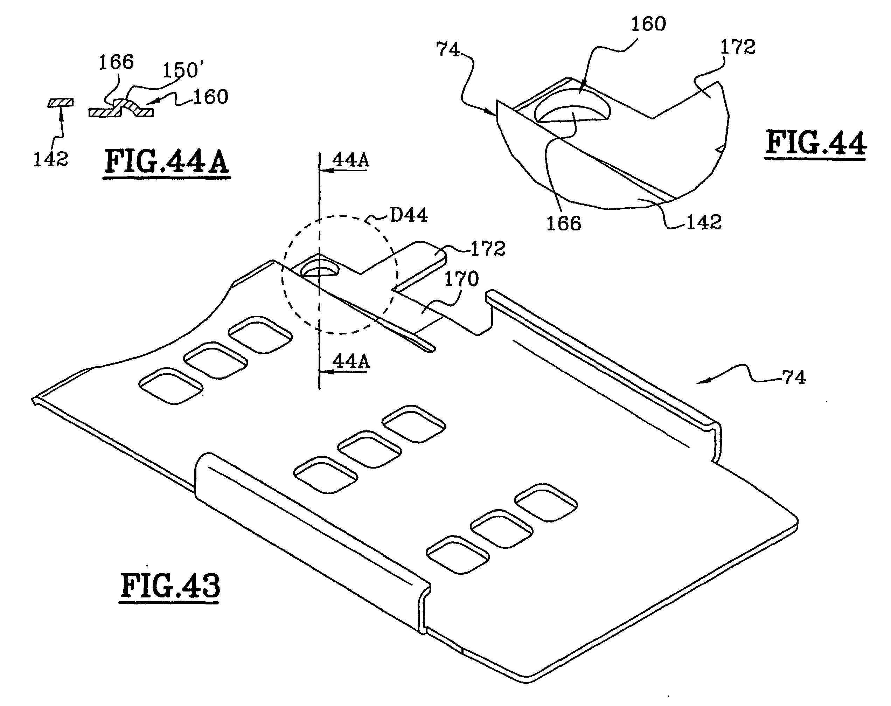

In the other embodiment variant illustrated in Figures 43, 44 and 44A, the stop lip 160 is formed directly in the carrier arm 162 near its free end 150' in the form of an approximately hemispherical dish or plunged recess with a sharp stop edge 166 inclined at 45° and oriented rearwards.

The seventh embodiment of the connector, illustrated in Figures 45 to 52, will now be described.

In this embodiment, the resilient means for ejecting the card are, for example, identical to those of the first embodiment, but the arrangement of the retaining lip and of the arm which carries it is different from that described with reference to the previous embodiments.

The carrier arm extends in this case longitudinally below the card C.

For this purpose, the edge 157 of the cover 74, which extends horizontally below the lower face of the insulating support 72, has a forward extension 206 which is wider and is extended longitudinally by the carrier arm 162 which, in its free rest state, extends beyond the extension 206, being inclined vertically upwards.

The lower face of the support 72 has a corresponding recess 208 which is located near the longitudinal edge 82 and the front transverse edge 84 and which is in the form of an inclined face in order to accommodate the carrier arm 162 and allow the upwardly inclined part of the carrier arm 162 to be accommodated. This configuration provides enough heightwise space - the space bounded by the plane of the printed-circuit board on which the connector is mounted - to allow elastic bending of the latter vertically downwards when a force in this direction is applied to the actuating tab 172. At rest, the arm 162 bears lightly against the inclined face 208 in order for the rest position of the lip 160 to be accurately defined.

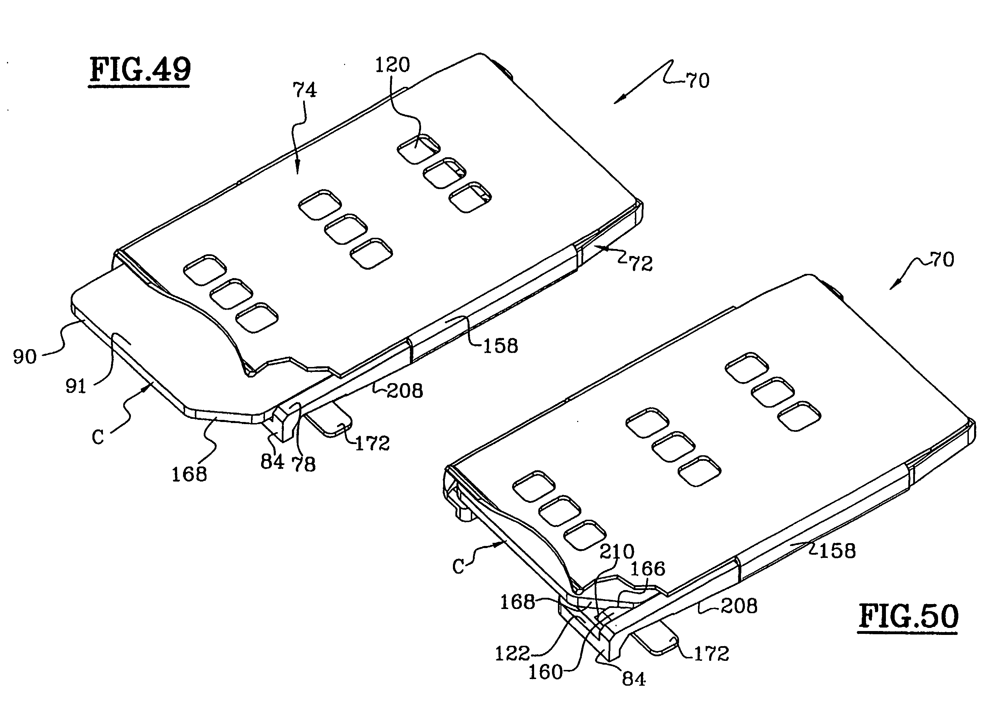

The recess 208 is extended forwards by a hole 210 which emerges in the bottom 106 of the housing 88 along the longitudinal edge 98. This hole allows passage of the lip 160 which is made in the form of a 180° fold-back at the front end of the carrier arm 162. The lip 160 thus extends above the carrier arm 162 and through the hole 210 so that its stop edge 166 extends inside the housing 88 opposite the corner face 168 of the card C when the latter is in the contact position (see Figure 50).

When the card C is being inserted, its rear transverse edge 120 engages with the edge 150' of the 180° fold-back of the arm 162 in order to cause the latter to bend downwards and to cause the lip 160 to retract into the hole 210. The insertion continues, during which the lip bears against the lower face 90 of the card C until the card butts against the stop 109. As soon as this position is reached, the lip is automatically returned to its locking position, illustrated especially in Figure 50.

For the purpose of automatically ejecting the card C, the user merely has to act on the actuating tab by pressing vertically downwards on the latter against the elasticity of the carrier arm 162.

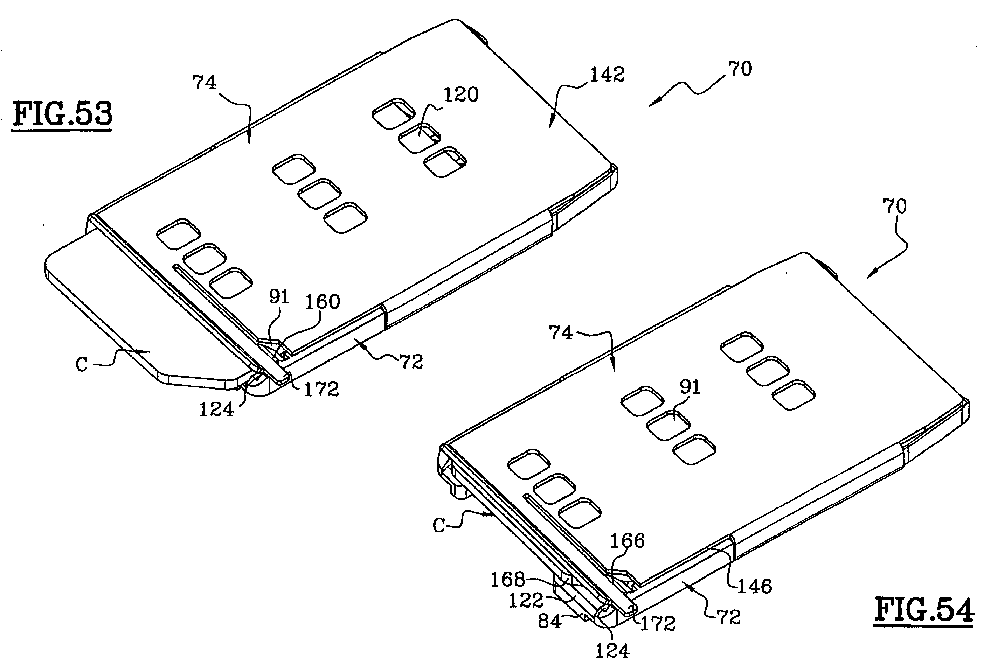

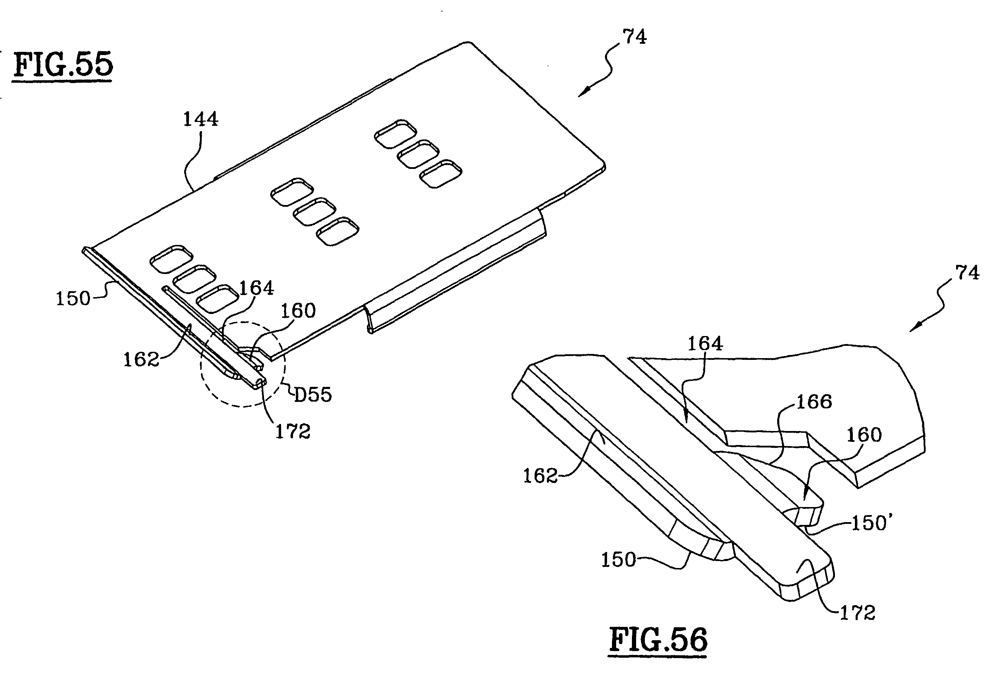

In the eighth embodiment, illustrated in Figures 53 to 56, the carrier arm 162 extends transversely in the plane of the upper plate 142 of the cover 74 and near its front transverse edge 150.

The insulating support 72 and the ejection means 130 are identical to those described and illustrated with reference to the first embodiment.

The slot 164, in this case having a transverse orientation, which delimits the carrier arm 162, also delimits the retaining lip 160, together with its inclined stop edge 166, which extends longitudinally rearwards and is inclined downwards so that its lower face 150' constitutes the cam-forming ramp intended to engage with the rear transverse edge 120 of the card C so as to retract the lip vertically upwards.

In its free rest state, the carrier arm 162 is coplanar with the plate 142 and the lip 160 extends vertically inside the housing 88 by virtue of the recess 124, it being possible for the same insulating support 72 to be used for the first and eighth embodiments.

In order to cause the lip 160 to move aside, all that is required is to "lift" the lip 160 by acting on the actuating tab 172 which in this case extends the carrier arm 162 so as to project transversely outwards.

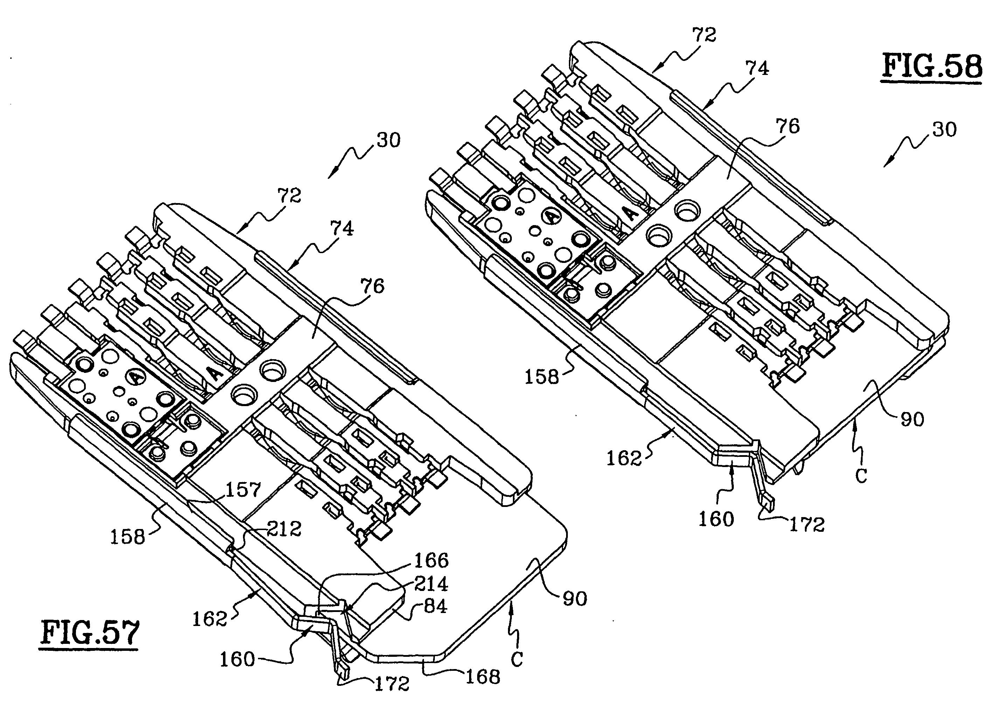

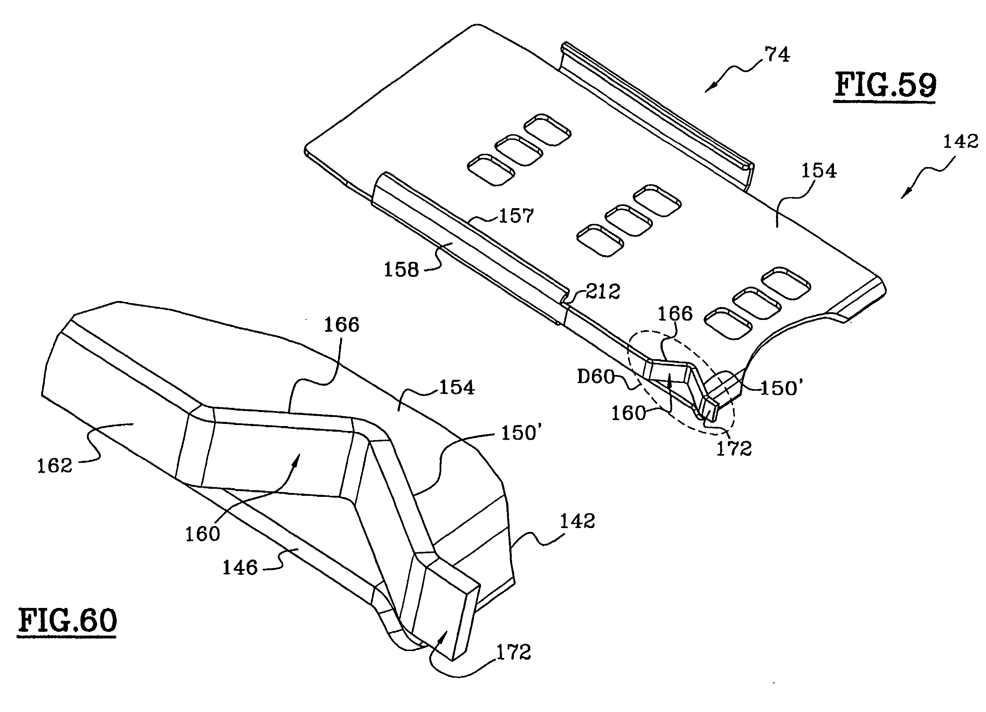

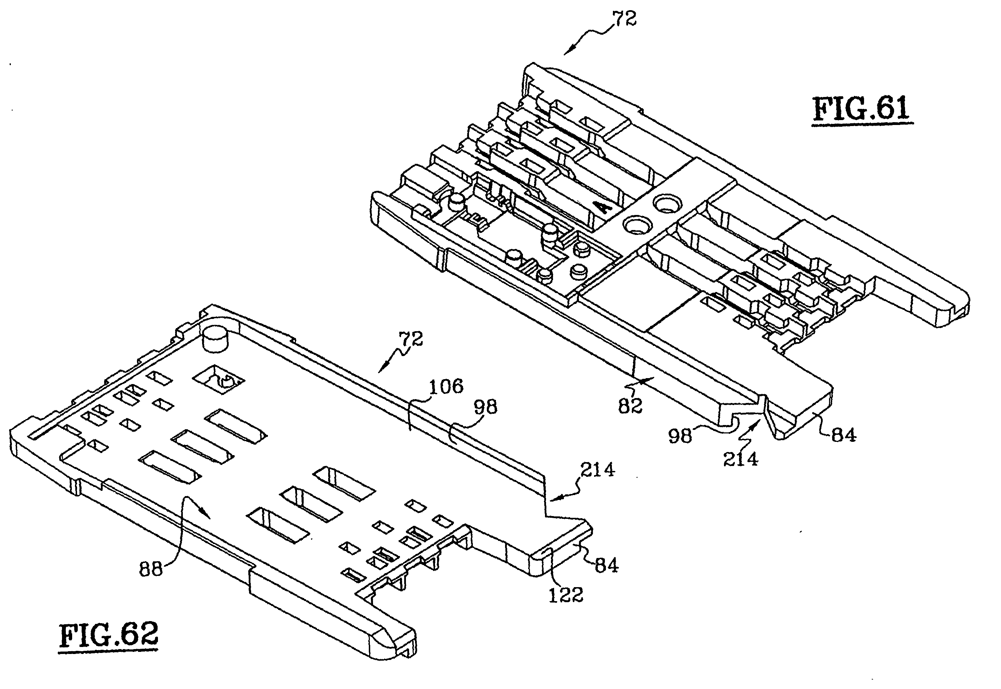

In the ninth embodiment, illustrated in Figures 57 to 62, the carrier arm 162 extends longitudinally forwards along the vertically oriented longitudinal edge 82 of the insulating support 72. For this purpose, the carrier arm 162 is made as a single piece with the cover 74 and extends beyond the front end edge 210 of the edge 158 of the cover 74.

The retaining lip 160 of the carrier arm is a V-shaped fold, the point of the V being oriented transversely towards the inside of the connector 70.

In order for the lip 160 to be able to extend inside the housing 88, the insulating support 72 has a lateral V-shaped recess 214 which also emerges through the bottom 106 of the housing 88. The rear arm of the V-fold constitutes the stop edge 166 of the lip, while the front arm 150' constitutes the cam for retracting the lip 160 with which the corresponding rear corner of the card C engages during insertion of the latter.

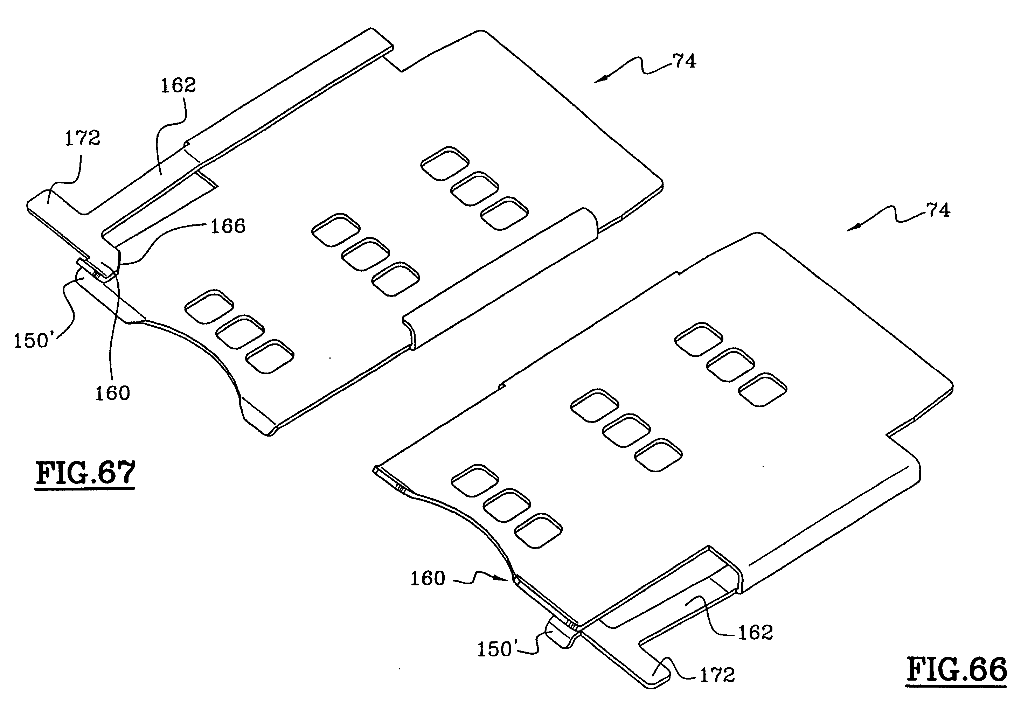

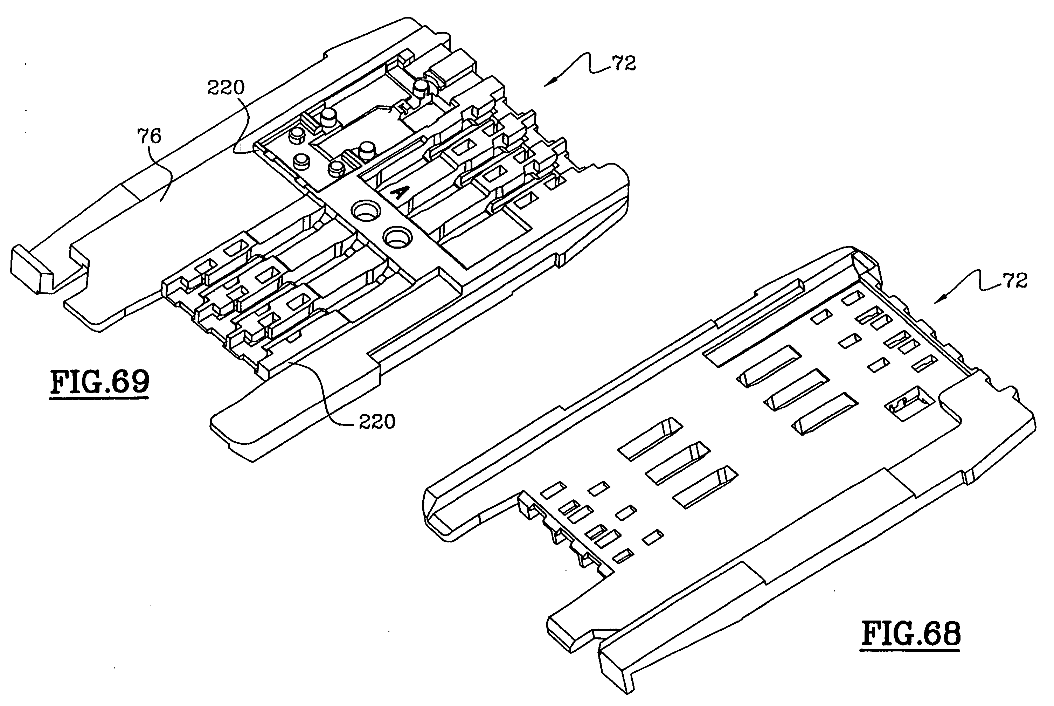

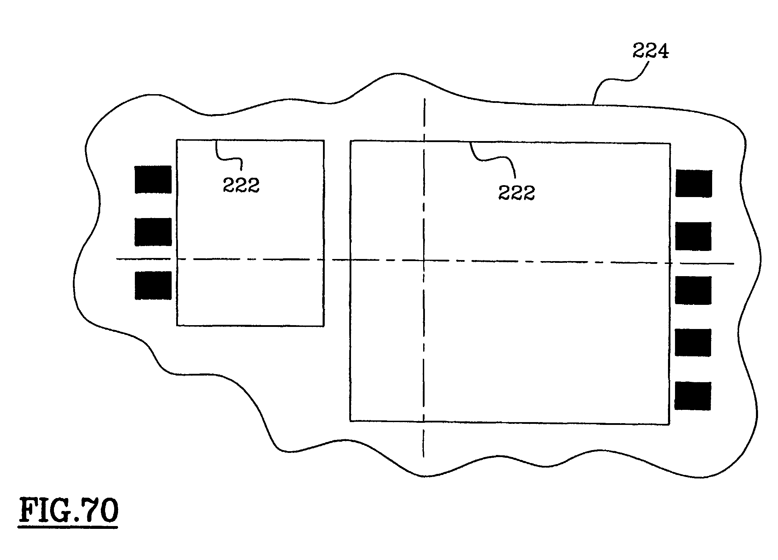

The tenth embodiment, illustrated in Figures 64 to 70, will now be described by comparing it especially with the seventh embodiment described previously, of which it forms a variant.

In order to simplify the construction of the retaining lip 160 carried by the arm 162, and especially to avoid making it with a 180° fold-back above the end of the arm 162, the retaining lip extends transversely towards the inside of the connector from the free end of the arm 162 and it extends in the same plane as the arm on the opposite side from the actuating tab which itself extends transversely outwards in the same plane.

This design therefore facilitates the construction of the retaining lip and it also makes it possible to produce the free front end edge 150' of the carrier arm 162 with a cam profile - in the form of a chamfer or of an inclined face - which engages with the front transverse edge 120 of the card C when the latter is inserted longitudinally, rearwards, into the housing 88 in the connector 70, so as to cause the retaining lip 160 to automatically move aside due to the elastic deformation of the carrier arm 162.

In order to allow the rear transverse edge 166 of the retaining lip to engage with the corner face of the card, a cut-out 210 is formed in the insulating support 72, the total width of the insulating support being slightly increased if it is compared with that of the connector according to the seventh embodiment.

As in the case of the connector illustrated in Figures 25 to 29 of document FR-A-2,747,847, which is a connector built into a casing of the "PCMCIA" type - so as to reduce the overall height of the connector lying above the printed-circuit board - the lower face 76 of the insulating support 72 has projecting blocks 220 which are accommodated in complementary cut-outs 222 formed in the printed-circuit board 224.

The shape of the cut-outs depends especially on whether or not there is a switch in the connector 70.

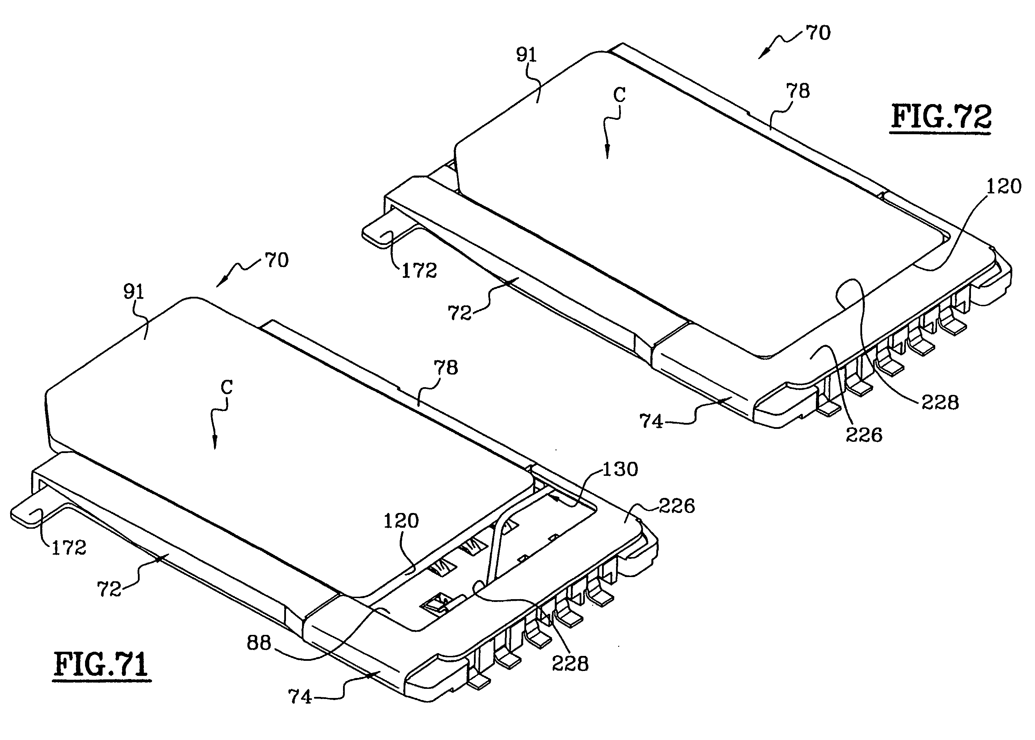

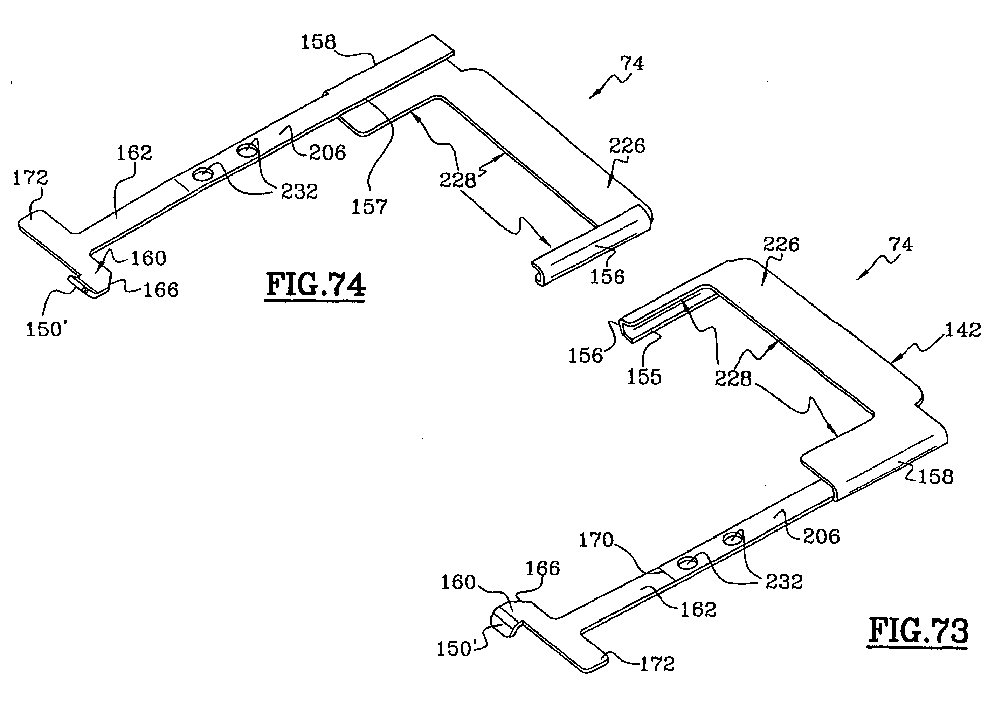

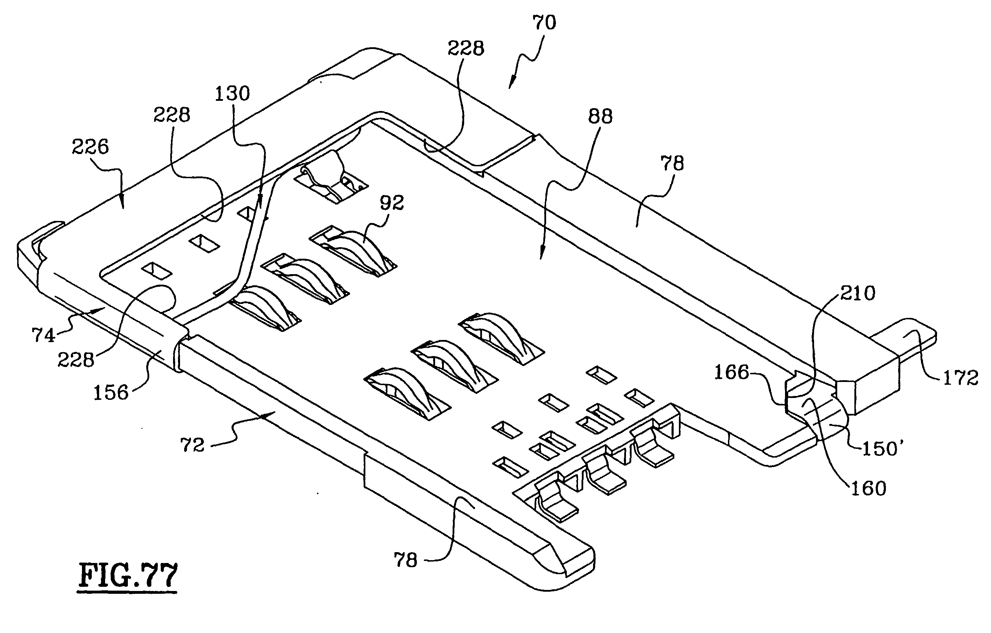

In the eleventh embodiment, illustrated in Figures 71 to 77, and so as to reduce the height of the upper part of the connector which extends above the printed-circuit board which carries it, the upper wall of the cover 74 does not extend above the card when the latter is in the contact position. The upper wall 142 is thus reduced at its rear end part 226 which extends horizontally above a portion of the rear part of the housing 88 in which the ejection spring 130 is located.

The rear part 226 of the plate 142 of the cover 74 is bounded by a rectangular cut-out 228, the outline of which is complementary to that of the card C.

The lateral edges 155-158 of the cover 74, which are folded over in order to fasten it to the insulating support 72, are also reduced in length and longitudinally offset rearwards.

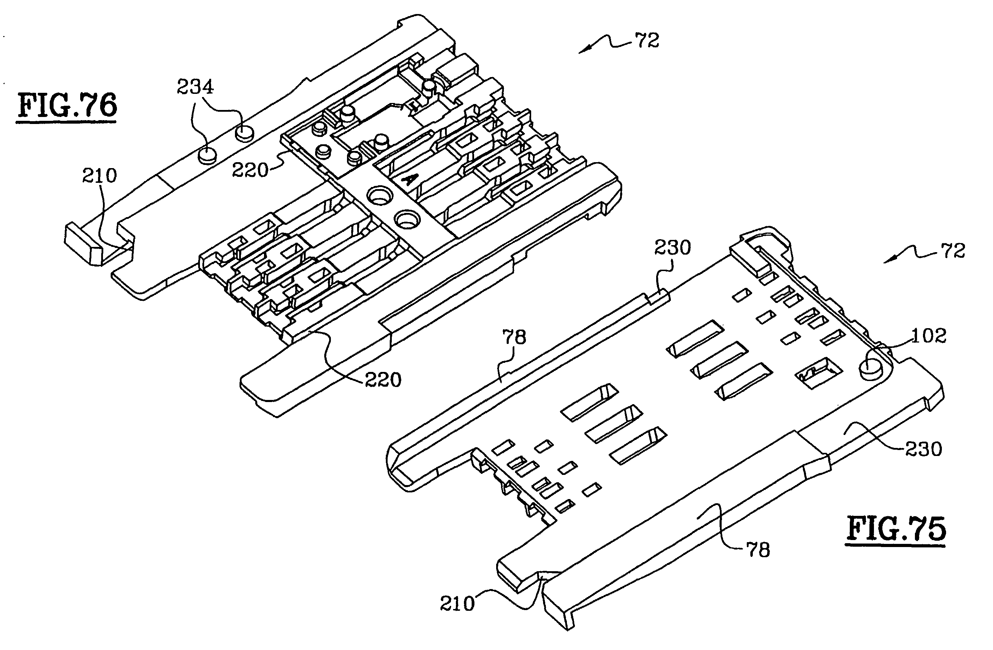

As may be seen especially in Figure 75, the upper face 78 of the insulating support 72 has recesses 230 which accommodate the corresponding lateral parts of the upper plate 142 of the cover, so as to reduce the overall height of the connector. Thus, the upper face 91 of the card C, in position in the housing 88, is flush with the upper face of the plate 142 which itself is approximately coplanar with the upper face 78 of the insulating support 72.

Such a connector is particularly suitable, because of its reduced thickness, for it to be incorporated into a casing, one upper face or wall of which extends above and in contact with the upper face 78 of the connector in order to "close" the housing 88 at the top and thus to keep the card C vertically in position in the housing 88. An example of such an application is, for example, a PCMCIA casing of the type described and illustrated in document FR-A-2.747.847.

In order to guarantee that the retaining lip is precisely positioned and that the carrier arm 162 is able to bend elastically, the extension 206 has two holes 232 which accommodate studs 234 that are formed opposite them on the lower face of the insulating support and are hot crimped in order to ensure good mechanical retention of the extension 206 on the insulating support 72. By way of a variant, only a single hole 232, with an associated crimping stud 234, may be provided.

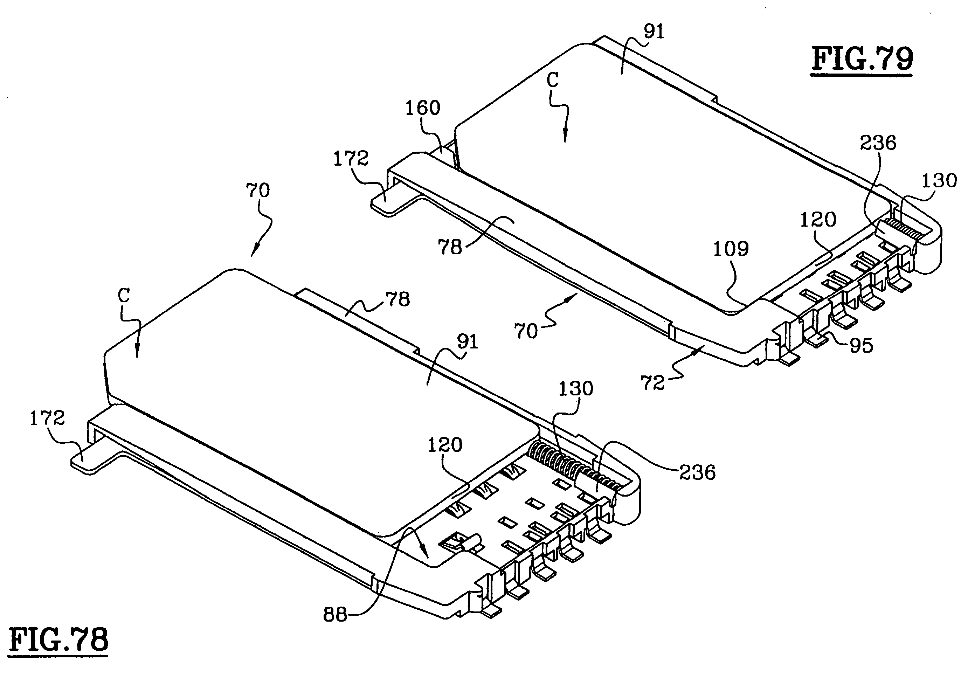

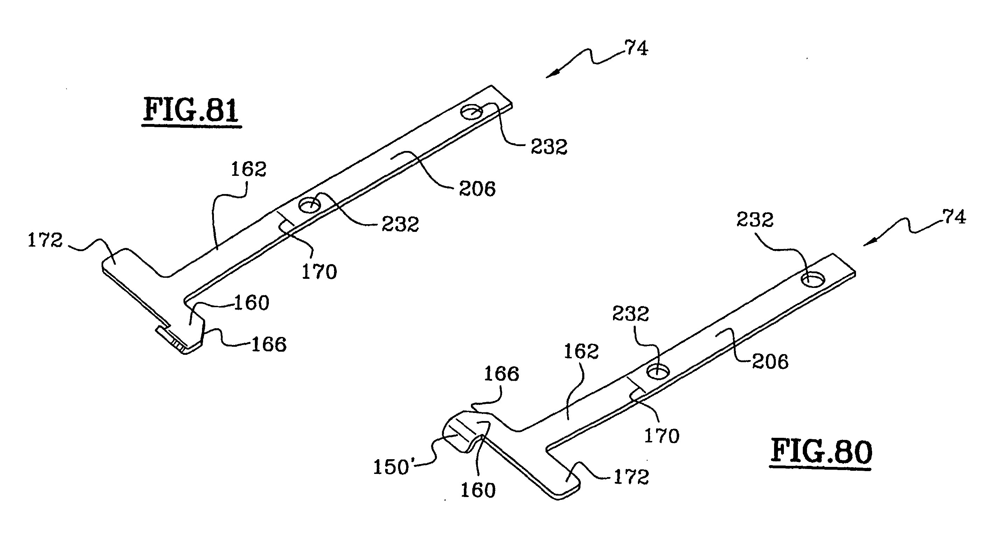

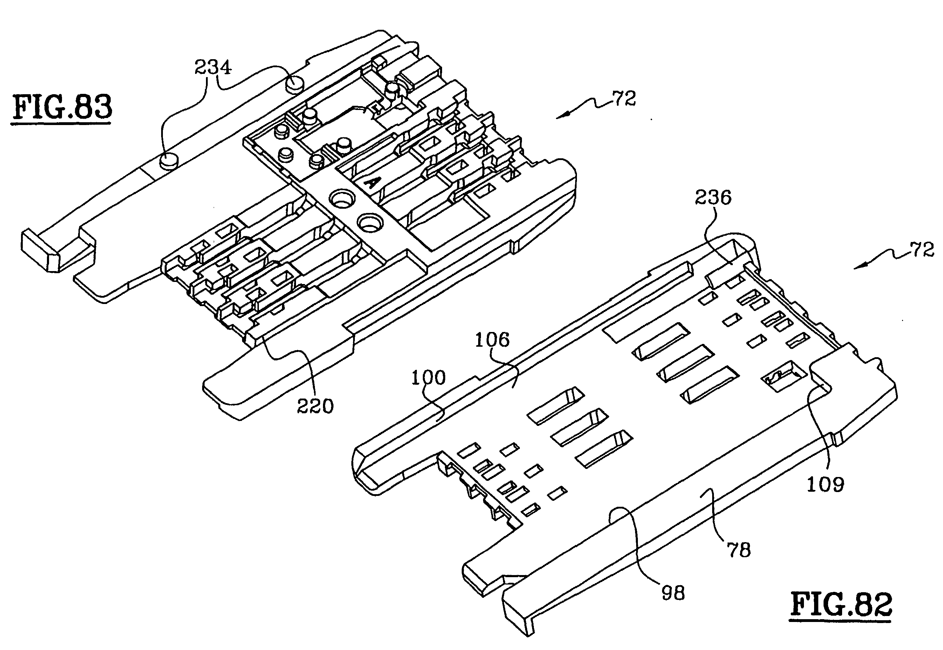

In the twelfth embodiment, illustrated in Figures 78 to 83 and which does not form part of the invention, for the purpose of producing a simplified connector having a very small total thickness, the carrier arm 162 of the lower retaining lip 160, the design of which is identical to that described and illustrated with reference to the two previous embodiments, is an independent piece fitted under the lower face of the insulating support 72 to which it is fastened by studs 234, as in the case of the previous embodiment.

The upper face 78 of the insulating support 72 is particularly simple, and the cavity 180 which accommodates the ejection coil spring 130 has a crimped rim 236 which temporarily retains the spring until the connector has been incorporated into a casing, the upper wall of which closes the housing 88, as for example in the case of the connector illustrated in Figures 12 to 19 of document FR-A-2.747.847 whose various embodiments of a connector incorporated into a PCMCIA casing have a retaining lip which is retractable vertically downwards and which extends below the front part of the insulating support.

The embodiment illustrated in Figures 84 to 92 will now be described.

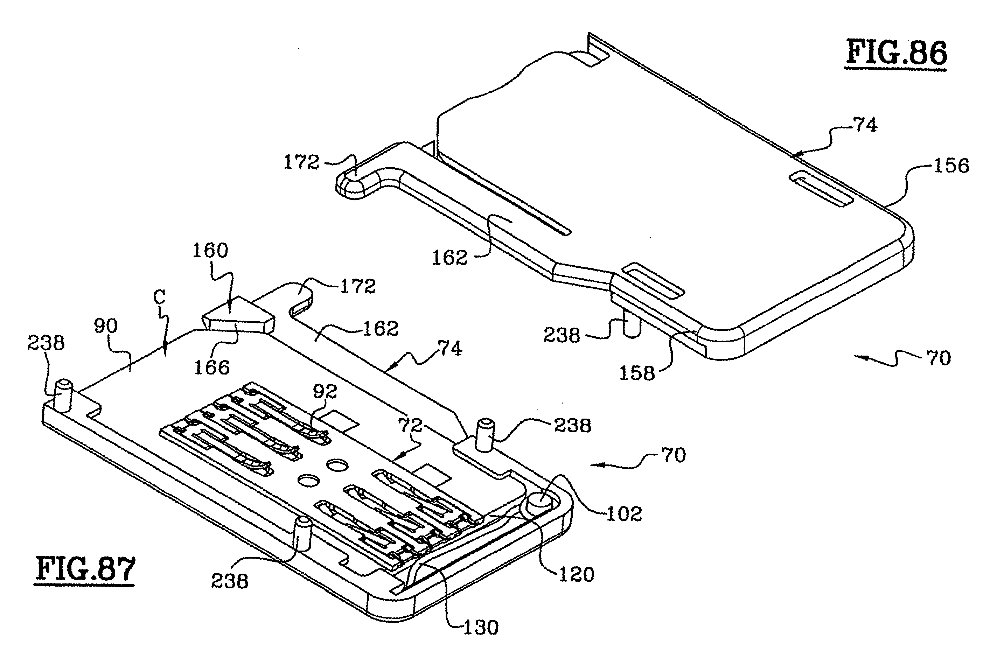

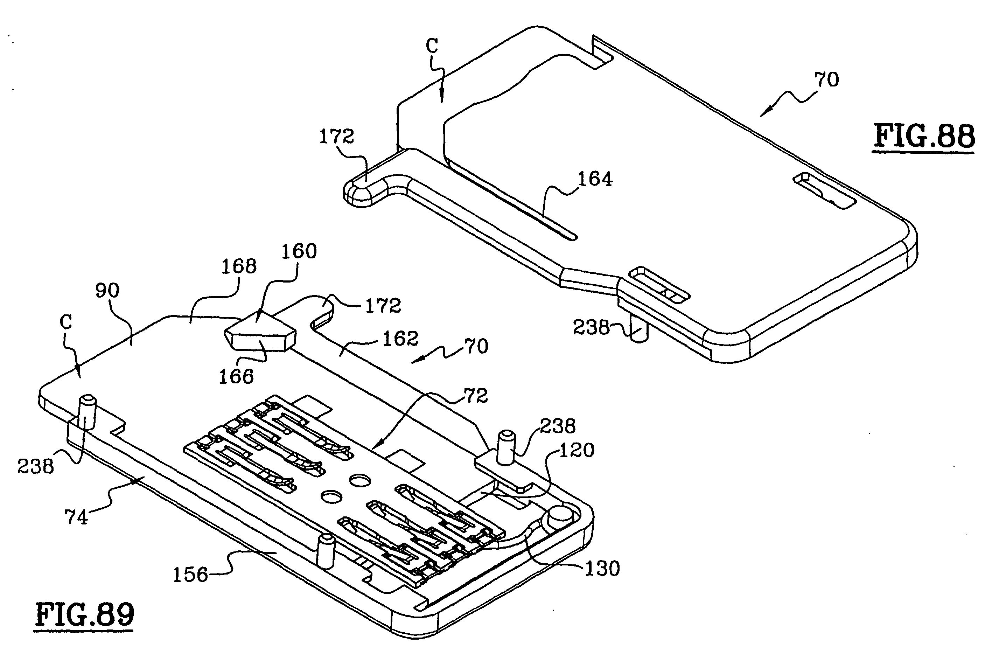

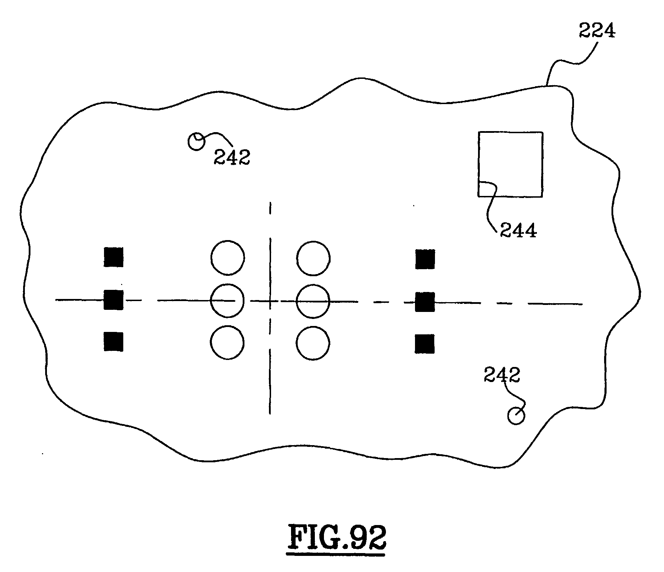

This thirteenth embodiment allows the implementation of the inventive concept according to the invention in combination with the teachings of French Patent Application FR-A-2.773.275 which describes and illustrates an ultrathin connector whose plate-shaped insulating support 72 (see Figures 87 and 89) is soldered to a printed-circuit board 224 (Figure 92) by means of the free connection ends 95 of the contact blades 92.

In such a design of a connector, the card C is not strictly speaking accommodated in a housing formed in the upper face of the insulating support, but the housing which does accommodate it and which guides it in the contact position above the insulating support is made in an equivalent manner in an element fitted above the insulating support.

In the thirteenth embodiment of the invention, it is the fitted cover 74 which has the guiding means and the housing which accommodates the card, the cover also having the carrier arm 162 of the retaining lip as well as the means for fastening and/or guiding the spring 130.

More specifically, the cover 74 is in this case a plastic moulded piece consisting essentially of an upper plate 142 and of two lateral, vertical and longitudinal walls 156 and 158 and of a transverse rear end wall 159.

In order to fasten the cover 74 to the printed-circuit board 224, the lower face of the walls 156, 158 and 159 has feet 238, in this case three in number, the free ends 240 of which are accommodated in holes 242 in the printed-circuit board 224 from below which they project vertically in order to allow an operation of hot-crimping the positioning and fastening feet or studs of the cover in a precise defined position with respect to the insulating support 172 which itself is fastened to the printed-circuit board 224.

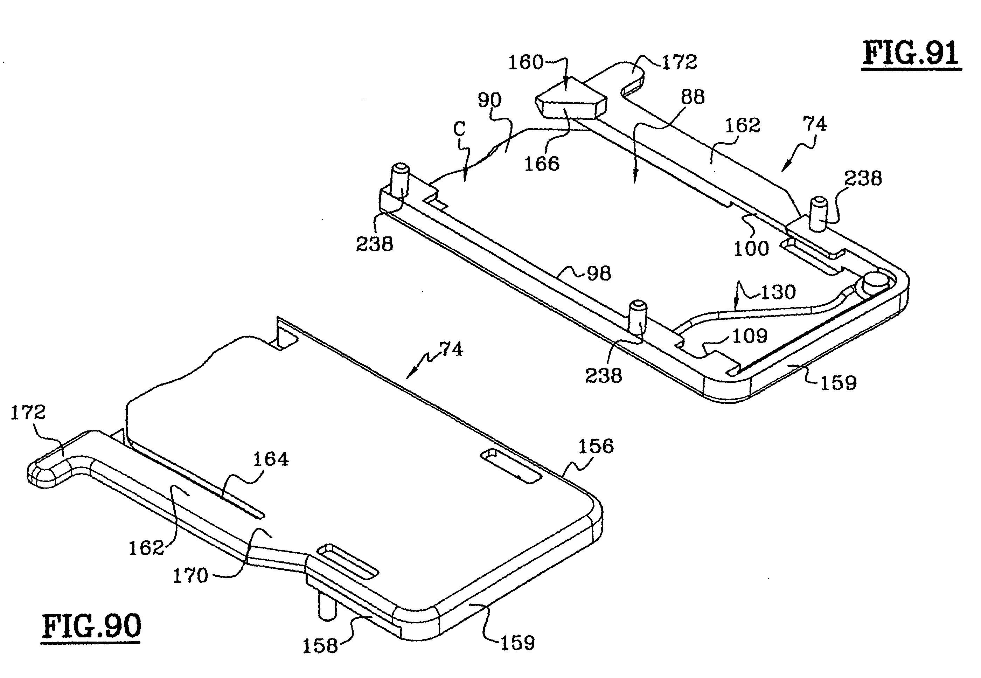

As may be seen especially in Figure 91, the housing 88 which accommodates the card C is formed in the lower internal face of the upper plate 142 of the cover 74. More specifically, the card C is guided longitudinally in the cover by two rails or slideways formed in the internal longitudinal edges 98 and 100 of the housing 88.

Likewise, the rear part of the card housing 88 formed in the cover 74 has the stud 102 for centring the ejection spring 130 which in this case is a wire spring similar to that described with reference to the first embodiment.

The carrier arm 162 is made as one plastic moulding with the cover 74 and it extends laterally along the upper plate 142, from which it is separated by a longitudinal slot 164 so as to be able to bend elastically about the region 170 forming a pivot pin, especially downwards with respect to its rest state in which it extends horizontally and in which the retaining lip 160, formed by moulding, at its front free end extends opposite the corner face 168 of the card, if the latter is in the contact position, or opposite the slot before the card C is inserted into the housing 88.

As may be especially seen in Figure 91, the lip 160 is formed as an additional thickness below the plane of the lower face of the carrier arm 162, being also transversely offset inwards. Consequently, and so as to allow it to retract vertically downwards when the card C is being inserted, or for the purpose of causing the latter to be automatically ejected, the printed-circuit board 224 has a cut-out 244 which is located in line with the lip 160 and allows the latter to retract downwards.

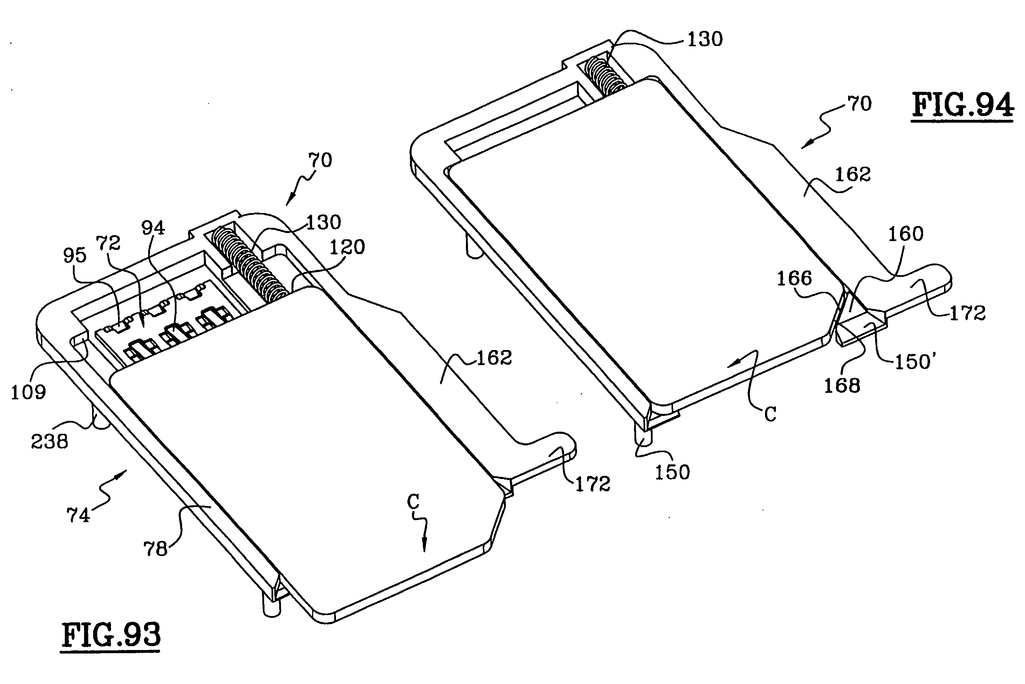

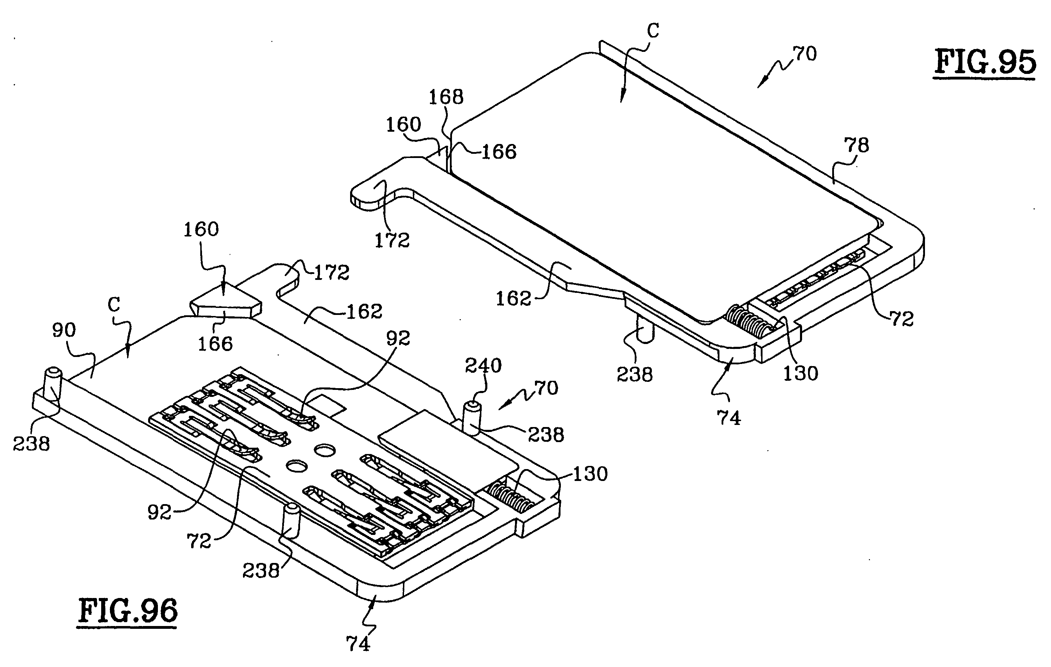

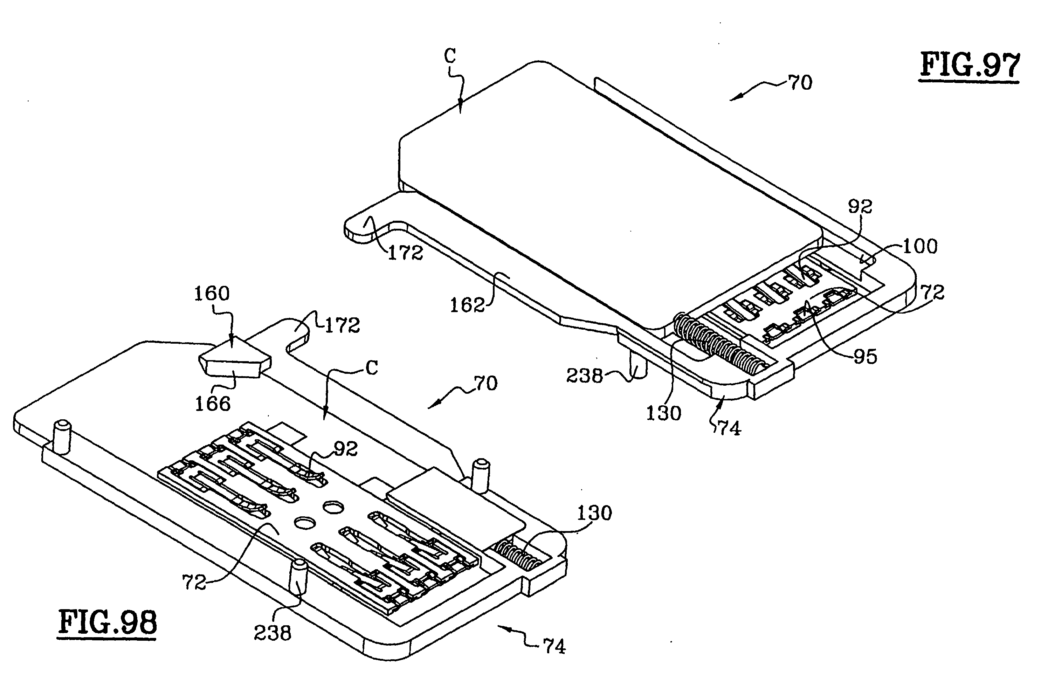

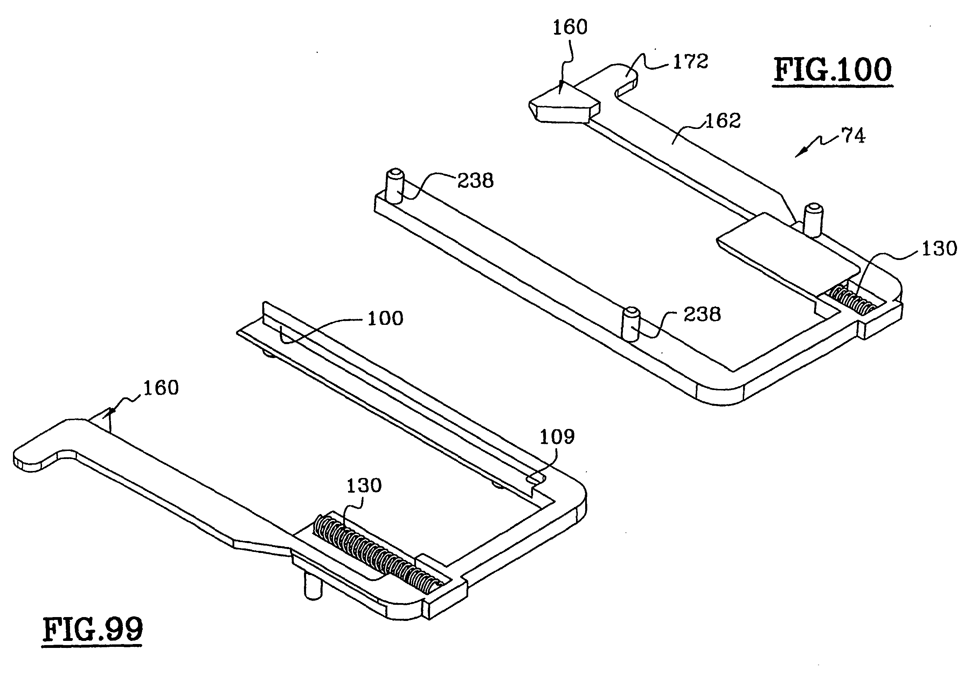

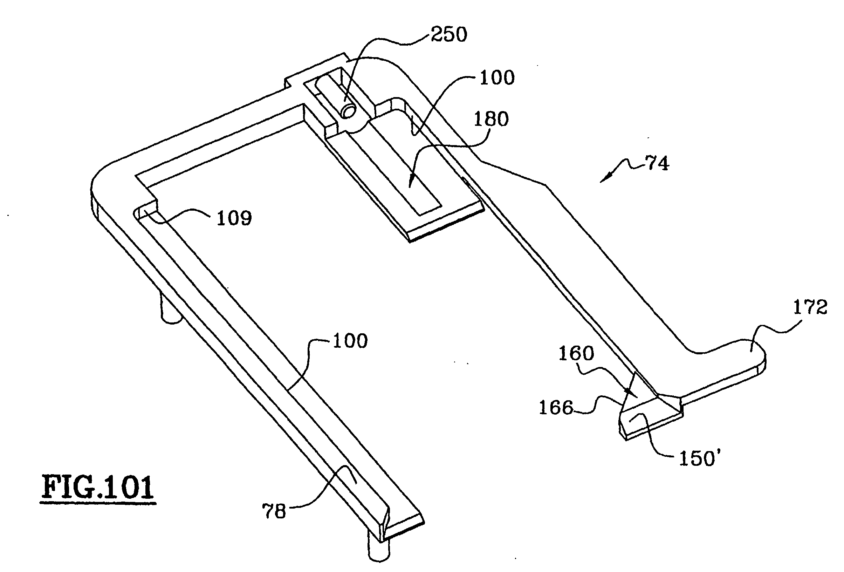

With regard to the fourteenth embodiment, illustrated in Figures 93 to 101, if it is compared with the previous one an analogy may be drawn with the embodiment illustrated in Figures 71 to 77.

In fact, here too, the upper plate 242 of the cover 74 is almost completely omitted and the upper face 91 of the card C is flush with the upper face 78 of the insulating support 72.

The return spring 130 is a coil spring which is held in place in the cover 74 by a longitudinal finger 250.

The above description has mentioned various designs, on the one hand of the resilient ejection means and, on the other hand of the retractable retaining means, according to several examples of combinations. Of course, there are many other possible ways of combining these various designs (not illustrated) without departing from the scope of the invention.

## Claims

1. Electrical connector (70) for the connection of a contact-type smart card (C), the connector comprising a support (72) made of insulating material and a housing (88), which housing is open in its upper face (78) and is bounded laterally by two edges (98, 100) parallel to the direction (I) of insertion of the card into the connector (70) and which housing at least partly accommodates the card (C), said card (C) having, on its lower main face (90), conducting pads which engage with the contact ends (92) of electrical contact elements (94) of the connector when the card (C) is in its contact position, these contact elements being arranged in the bottom (106) of the housing (88) in the insulating support (72), and said connector further comprising a fitted cover (74), the upper wall (142) of said cover extending at least partly above the insulating support (72) of the connector (70),
**characterised in that** the connector further comprises a spring (130) for engaging the rear transverse edge (120) of the card (C) and for ejecting the card from the connector (70),
and **in that** the cover (74) has a retractable device (160, 166) for retaining the card (C) in the position it is in after being inserted into the connector (70).

2. Connector (70) according to the preceding claim, **characterised in that** the retractable device (160, 162, 166) is made as one piece with the cover (74).

3. Connector (70) according to the preceding claim, **characterised in that** the retractable retaining device has a retaining lip (160) which is carried by an elastically deformable arm (162) of the cover (74), a stop edge (166) of which lip normally extends opposite the front transverse edge (168) of the card, and which lip can be moved, by elastic deformation of the arm (162) which carries the lip, to a retracted position in which the card (C) can be ejected longitudinally, at least partially, by the ejection spring (130).

4. Connector (70) according to the preceding claim, **characterised in that** the profile of the stop edge (166) is complementary to that of the portion (168) of the front transverse edge of the card (C) opposite which it extends.

5. Connector (70) according to the preceding claim, **characterised in that** the card (C) has, at one of the corners of its front transverse edge, a corner face (168) which constitutes a means of polarizing the position of the card (C) in the connector (70) and **in that** the stop edge (166) of the retaining lip (160) extends opposite the corner face (168) of the card.

6. Connector (70) according to the preceding claim, **characterised in that**, when the card (C) is being inserted into the connector (70), the retaining lip (160) is automatically moved aside by the action of the rear transverse edge of the card (C) which engages with one edge of the cam-forming lip (160) in order to cause the elastic deformation of the arm (162), the lip (160) bearing against a facing portion of the card (C) during the insertion or ejection travel by the card (C).

7. Connector (70) according to claim 3, **characterised in that** the arm (162) carrying the retaining lip (160) extends parallel to the direction (I) of insertion, of the card (C).

8. Connector (70) according to claims 3, **characterised in that** the arm (162) carrying the retaining lip (160) extends perpendicular to the direction (I) of insertion of the card.

9. Connector (70) according to any one of claims 3, 8, **characterised in that** the cover (74) is made in the form of a plate (142) which has at least one slot (164) or cut-out, parallel to one (146, 150) of its edges (144, 146, 148, 150), which delimits the arm (162) carrying the retaining lip (160).

10. Connector (70) according to Claim 9, **characterised in that** the arm (162) carrying the retaining lip (160) extends in the plane of an upper wall (142) of the cover (74), opposite a facing portion of the upper face of the insulating support (72).

11. Connector (70) according to Claim 9 taken in combination with Claim 7, **characterised in that** the arm (162) carrying the retaining lip (160) extends in a plane perpendicular to the plane (142) of an upper wall of the cover (74), opposite one of the external lateral faces (82) of the insulating support (72).

12. Connector (70) according to Claim 9 taken in combination with Claim 7, **characterised in that** the arm (162) carrying the retaining lip (160) extends in a plane parallel to the plane of an upper wall (142) of the cover (74), opposite a facing portion (208) of the lower face (76) of the insulating support (72).

13. Connector (70) according to claim 3, **characterised in that** the arm (162) carrying the retaining lip (160) has a tab (172) for initiating its elastic deformation in order to retract the retaining lip (160).

14. Connector (70) according to any one of the preceding claims, **characterised in that** the ejection spring (130) extends inside a housing (88) at least partly formed in the upper face (78) of the insulating support (72) and/or of the cover (74).

15. Connector (70) according to the preceding claim, **characterised in that** the spring (130) is a fitted element carried by the insulating support (72) and/or the cover (74).

16. Connector (70) according to Claim 14, **characterised in that** the spring (130) is an elastically deformable strip made as one piece with the cover (74).

17. Connector (70) according to any one of the preceding claims, **characterised in that** the cover (74) is a piece made of cut and folded sheet metal.

18. Connector (70) according to any one of Claims 1 to 16, **characterised in that** the cover (74) is a plastic moulded piece.

19. Connector (70) according to any one of the preceding claims, **characterised in that** the cover (74) is fitted directly onto the insulating support (72).

20. Connector (70) according to any one of Claims 1 to 19, **characterised in that** the cover (74) is fitted onto a printed-circuit board (224) which carries the insulating support (72).

## Patentansprüche

1. Elektrischer Steckverbinder (70) fiir die Verbindung mit einer Kontakt-IC-Karte (C), wobei der Steckverbinder einen Träger (72) aus Isoliermaterial und ein Gehäuse (88) aufweist, wobei das Gehäuse an seiner Oberseite (78) offen und seitlich durch zwei Kanten (98, 100) begrenzt ist, die parallel zur Einsteckrichtung (I) der Karte in den Steckverbinder (70) verlaufen, und wobei das Gehäuse die Karte (C) zumindest teilweise aufnimmt, wobei die Karte (C) an ihrer unteren Hauptfläche (90) Leiterplättchen aufweist, welche die Kontakt-Enden (92) von elektrischen Kontaktelementen (94) kontaktieren, wenn die Karte (C) sich in der Kontaktposition befindet, wobei diese Kontaktelemente im Boden (106) des Gehäuses (88) in dem Isolierträger (72) angeordnet sind, und wobei der Steckverbinder ferner eine befestigte Abdeckung (74) umfasst, wobei sich die obere Wand (142) der Abdeckung zumindest teilweise oberhalb des Isolierträgers (72) des Steckverbinders (70) erstreckt,
**dadurch gekennzeichnet, dass** der Steckverbinder ferner eine Feder (130) umfasst, die an der hinteren Querkante (120) der Karte (C) anliegt, um die Karte aus dem Steckverbinder (70) auswerfen zu können,
und **dadurch gekennzeichnet, dass** die Abdeckung (74) eine rückziehbare Einrichtung (160, 166) aufweist, um die Karte (C) in der Position zu halten, die sie nach dem Einführen in den Steckverbinder (70) einnimmt.

2. Steckverbinder (70) gemäß dem vorhergehenden Anspruch, **dadurch gekennzeichnet, dass** die rückziehbare Vorrichtung (160, 162, 166) mit der Abdeckung (74) einstückig hergestellt ist.

3. Steckverbinder (70) gemäß dem vorhergehenden Anspruch, **dadurch gekennzeichnet, dass** die rückziehbare Halteeinrichtung eine Haltezunge (160) aufweist, die von einem elastisch verformbaren Ausleger (162) der Abdeckung (74) getragen wird, wobei die Anschlagskante (166) der Zunge normalerweise gegenüber der vorderen Querkante (168) der Karte verläuft, und wobei die Zunge durch eine elastische Verformung des Auslegers (162), der die Zunge trägt, in eine Rückzugsposition bewegt werden kann, in der die Karte (C) durch die Auswurffeder (130) zumindest teilweise in die Längsrichtung ausgeworfen werden kann.

4. Steckverbinder (70) gemäß dem vorhergehenden Anspruch, **dadurch gekennzeichnet, dass** das Profil der Anschlagkante (166) zu dem des Abschnitts (168) der vorderen Querkante der Karte (C), dem es gegenüberliegt, komplementär ist.

5. Steckverbinder (70) gemäß dem vorhergehenden Anspruch, **dadurch gekennzeichnet, dass** die Karte (C) an einer Ecke ihrer vorderen Querkante eine eckseitige Fläche (168) aufweist, die ein Mittel zum polarisierten Positionieren der Karte (C) im Steckverbinder (70) bildet, und **dadurch gekennzeichnet, dass** die Anschlagkante (166) der Haltezunge (160) sich zur eckseitigen Fläche (168) der Karte gegenüberliegend erstreckt.

6. Steckverbinder (70) gemäß dem vorhergehenden Anspruch, **dadurch gekennzeichnet, dass**, wenn die Karte (C) in den Steckverbinder (70) eingeführt wird, die Haltezunge (160) durch die Einwirkung der hinteren Querkante der Karte (C), die eine Kante der einen Nocken bildenden Zunge (160) kontaktiert, automatisch zur Seite bewegt wird, um eine elastische Verformung des Auslegers (162) zu bewirken, wobei die Zunge (160) gegen einen ihr gegenüber liegenden Abschnitt der Karte (C) drückt, während die Karte ihren Einsteck- oder Auswurfweg zurücklegt.

7. Steckverbinder (70) gemäß Anspruch 3, **dadurch gekennzeichnet, dass** der Ausleger (162), der die Haltezunge (160) trägt, parallel zur Einsteckrichtung (I) der Karte verläuft.

8. Steckverbinder (70) gemäß Anspruch 3, **dadurch gekennzeichnet, dass** der Ausleger (162), der die Haltezunge (160) trägt, senkrecht zur Einsteckrichtung (I) der Karte verläuft.

9. Steckverbinder (70) gemäß einem der Ansprüche 3 bis 8, **dadurch gekennzeichnet, dass** die Abdeckung (74) in Form einer Platte (142) hergestellt ist, die mindestens einen Schlitz (164) oder Ausschnitt parallel zu einer (146, 150) ihrer Kanten (144, 146, 148, 150) aufweist, die an den Ausleger (162) grenzt, der die Haltezunge (160) trägt.

10. Steckverbinder (70) gemäß Anspruch 9, **dadurch gekennzeichnet, dass** der Ausleger (162), der die Haltezunge (160) trägt, in der Ebene einer oberen Wand (142) der Abdeckung (74) gegenüber einem ihm gegenüber liegenden Abschnitt der Oberseite des Isolierträgers (72) verläuft.

11. Steckverbinder (70) gemäß Anspruch 9 im Kombination mit Anspruch 7, **dadurch gekennzeichnet, dass** der Ausleger (162), der die Haltezunge (160) trägt, in einer Ebene senkrecht zur Ebene (142) einer oberen Wand der Abdeckung (74) gegenüber einer der äußeren Seitenflächen (82) des Isolierträgers (72) verläuft.

12. Steckverbinder (70) gemäß Anspruch 9 in Kombination mit Anspruch 7, **dadurch gekennzeichnet, dass** der Ausleger (162), der die Haltezunge (160) trägt, in einer Ebene parallel zur Ebene einer oberen Wand (142) der Abdeckung (74) gegenüber einem ihm gegenüber liegenden Abschnitt (208) der Unterseite (76) des Isolierträgers (72) verläuft.

13. Steckverbinder (70) gemäß Anspruch 3, **dadurch gekennzeichnet, dass** der Ausleger (162), der die Haltezunge trägt, eine Lasche (172) aufweist, um seine elastische Verformung einzuleiten, damit die Haltezunge (160) zurückgezogen wird.

14. Steckverbinder (70) gemäß einem der vorhergehenden Ansprüche, **dadurch gekennzeichnet, dass** sich die Auswurffeder (130) in einem Gehäuse (88) erstreckt, das zumindest teilweise auf der Oberseite (78) des Isolierträgers (72) und/oder der Abdeckung (74) ausgebildet ist.

15. Steckverbinder (70) gemäß dem vorhergehenden Anspruch, **dadurch gekennzeichnet, dass** die Feder (130) ein eingepasstes Element ist, das vom Isolierträger (72) und/oder der Abdeckung (74) getragen wird.

16. Steckverbinder (70) gemäß Anspruch 14, **dadurch gekennzeichnet, dass** die Feder (130) ein elastisch verformbares Metallband ist, das einstückig mit der Abdeckung (74) hergestellt ist.

17. Steckverbinder (70) gemäß einem der vorhergehenden Ansprüche, **dadurch gekennzeichnet, dass** die Abdeckung (74) ein Stück ist, das aus geschnittenem und gefaltetem Metallblech hergestellt ist.

18. Steckverbinder (70) gemäß einem der Ansprüche 1 bis 16, **dadurch gekennzeichnet, dass** die Abdeckung (74) ein aus Kunststoff geformtes Teil ist.

19. Steckverbinder (70) gemäß einem der vorhergehenden Ansprüche, **dadurch gekennzeichnet, dass** die Abdeckung (74) direkt auf dem Isolierträger (72) befestigt ist.

20. Steckverbinder (70) gemäß einem der Ansprüche 1 bis 19, **dadurch gekennzeichnet, dass** die Abdeckung (74) auf einer Leiterplatine (224) befestigt ist, welche den Isolierträger (72) trägt.

## Revendications

1. Connecteur électrique (70), pour le raccordement d'une carte à circuit(s) intégré(s) à contact (C), le connecteur comportant un support (72) en matériau isolant et un logement (88), ledit logement étant ouvert dans sa face supérieure (78), et délimité latéralement par deux bords (98, 100) parallèles à la direction (I) d'introduction de la carte dans le connecteur (70) et ledit logement recevant au moins en partie la carte (C), ladite carte comportant, sur sa face principale inférieure (90), des plages conductrices qui coopèrent avec les extrémités de contact (92) d'éléments de contact électrique (94) du connecteur lorsque la carte (C) est dans sa position de contact, ces éléments de contact étant agencés dans le fond (106) du logement (88) du support (72) isolant, ledit connecteur comportant de plus un couvercle (74) rapporté dont la paroi supérieure (142) s'étend au moins en partie au-dessus du support (72) isolant du connecteur (70),
**caractérisé en ce que** le connecteur comprend de plus un ressort (130) de coopération du bord transversal arrière (120) de la carte (C) et d'éjection de la carte hors du connecteur (70),
et **en ce que** le couvercle (74) comporte un dispositif escamotable (160, 166) de retenue de la carte (C) en position introduite dans le connecteur (70).

2. Connecteur (70) selon la revendication précédente, **caractérisé en ce que** le dispositif escamotable (160, 162, 166) est réalisé venu de matière en une seule pièce avec le couvercle (74).

3. Connecteur (70) selon la revendication précédente, **caractérisé en ce que** le dispositif escamotable de retenue comporte une lèvre (160) de retenue qui est portée par un bras (162) déformable élastiquement du couvercle (74), dont un bord de butée (166) de ladite lèvre s'étendant normalement en regard du bord transversal avant (168) de la carte, et ladite lèvre pouvant être déplacée, par déformation élastique du bras (162) qui la porte, vers une position escamotée dans laquelle la carte (C) peut être éjectée longitudinalement, au moins partiellement, par le ressort (130) d'éjection.

4. Connecteur (70) selon la revendication précédente, **caractérisé en ce que** le profil du bord de butée (166) est complémentaire de celui de la portion (168) du bord transversal avant de la carte (C) en regard duquel il s'étend.

5. Connecteur (70) selon la revendication précédente, **caractérisé en ce que** la carte (C) comporte, à l'un des angles de son bord transversal avant, un pan coupé (168) qui constitue un moyen de détrompage de la position de la carte (C) dans le connecteur (70), et **en ce que** le bord de butée (166) de la lèvre (160) de retenue s'étend en regard du pan coupé (168) de la carte.

6. Connecteur (70) selon la revendication précédente, **caractérisé en ce que**, lors de l'introduction de la carte (C) dans le connecteur (70), la lèvre (160) de retenue est effacée automatiquement sous l'action du bord transversal arrière de la carte (C) qui coopère avec un bord de la lèvre (160) formant came pour provoquer la déformation élastique du bras (162), la lèvre (160) étant en appui contre une portion en vis-à-vis de la carte (C) lors de la course d'introduction ou d'éjection de la carte (C).

7. Connecteur (70) selon la revendication 3, **caractérisé en ce que** le bras (162) porteur de la lèvre (160) de retenue s'étend parallèlement à la direction (I) d'introduction de la carte (C).

8. Connecteur (70) selon la revendication 3, **caractérisé en ce que** le bras (162) porteur de la lèvre (160) de retenue s'étend perpendiculairement à la direction (I) d'introduction de la carte.

9. Connecteur (70) selon l'une quelconque des revendications 3 à 8, **caractérisé en ce que** le couvercle (74) est réalisé en une plaque (142) qui comporte au moins une fente (164) ou une découpe, parallèle à l'un (146, 150) de ses bords (144, 146, 148, 150) qui délimite le bras (162) porteur de la lèvre (160) de retenue.

10. Connecteur (70) selon la revendication 9, **caractérisé en ce que** le bras (162) porteur de la lèvre (160) de retenue s'étend dans le plan d'une paroi supérieure (142) du couvercle (74), en regard d'une portion en vis-à-vis de la face supérieure du support (72) isolant.

11. Connecteur (70) selon la revendication 9 prise en combinaison avec la revendication 7, **caractérisé en ce que** le bras (162) porteur de la lèvre (160) de retenue s'étend dans un plan perpendiculaire au plan (142) d'une paroi supérieure du couvercle (74), en regard de l'une des faces latérales externes (82) du support (72) isolant.

12. Connecteur (70) selon la revendication 9 prise en combinaison avec la revendication 7, **caractérisé en ce que** le bras (162) porteur de la lèvre (160) de retenue s'étend dans un plan parallèle au plan d'une paroi supérieure (142) du couvercle (74), en regard d'une portion en vis-à-vis (208) de la face inférieure (76) du support (72) isolant.

13. Connecteur (70) selon la revendication 3, **caractérisé en ce que** le bras (162) porteur de la lèvre (160) de retenue comporte une patte (172) de commande de sa déformation élastique pour escamoter la lèvre (160) de retenue.

14. Connecteur (70) selon l'une quelconque des revendications précédentes, **caractérisé en ce que** le ressort (130) d'éjection s'étend à l'intérieur d'un logement (88) formé au moins en partie dans la face supérieure (78) du support (72) isolant et/ou du couvercle (74).

15. Connecteur (70) selon la revendication précédente, **caractérisé en ce que** le ressort (130) est un élément rapporté porté par le support (72) isolant et/ou le couvercle (74).

16. Connecteur (70) selon la revendication 14, **caractérisé en ce que** le ressort (130) est une lame déformable élastiquement réalisée en une seule pièce avec le couvercle (74).

17. Connecteur (70) selon l'une quelconque des revendications précédentes, **caractérisé en ce que** le couvercle (74) est une pièce en tôle découpée et pliée.

18. Connecteur (70) selon l'une quelconque des revendications 1 à 16, **caractérisé en ce que** le couvercle (74) est une pièce moulée en matière plastique.

19. Connecteur (70) selon l'une quelconque des revendications précédentes, **caractérisé en ce que** le couvercle (74) est rapporté directement sur le support isolant (72).

20. Connecteur (70) selon l'une quelconque des revendications 1 à 19, **caractérisé en ce que** le couvercle (74) est rapporté sur une plaque à circuit imprimé (224) qui porte le support isolant (72).
